(19) Europäisches Patentamt
European Patent Office
Office européen des brevets

(11) EP 1 357 628 A1

(12) **EUROPEAN PATENT APPLICATION**
published in accordance with Art. 158(3) EPC

(43) Date of publication:
**29.10.2003 Bulletin 2003/44**

(21) Application number: **01995034.4**

(22) Date of filing: **28.12.2001**

(51) Int Cl.$^7$: **H01M 10/40**, H01M 4/58, H01M 4/02

(86) International application number:
**PCT/JP01/11630**

(87) International publication number:
**WO 02/056408 (18.07.2002 Gazette 2002/29)**

(84) Designated Contracting States:
**AT BE CH CY DE DK ES FI FR GB GR IE IT LI LU MC NL PT SE TR**
Designated Extension States:
**AL LT LV MK RO SI**

(30) Priority:
**04.01.2001 JP 2001000080**
**04.01.2001 JP 2001000081**
**06.12.2001 JP 2001372549**
**06.12.2001 JP 2001372550**
**20.12.2001 JP 2001388034**
**20.12.2001 JP 2001388035**

(71) Applicant: **MITSUBISHI CHEMICAL CORPORATION**
**Chiyoda-ku, Tokyo 100-0005 (JP)**

(72) Inventors:
- **YASUKAWA, Eiki, c/o Mitsubishi Chemical Inashiki-gun, Ibaraki 300-0332 (JP)**
- **SHIMA, Kunihisa, c/o Mitsubishi Chemical Inashiki-gun, Ibaraki 300-0332 (JP)**
- **KOMINATO, Asao, c/o Mitsubishi Chemical Inashiki-gun, Ibaraki 300-0332 (JP)**
- **ISHIGAKI, Ken-ichi, c/o Mitsubishi Chemical Inashiki-gun, Ibaraki 300-0332 (JP)**
- **WANG, Xianming, c/o Mitsubishi Chemical Inashiki-gun, Ibaraki 300-0332 (JP)**
- **FUJII, Takashi, c/o Mitsubishi Chemical Inashiki-gun, Ibaraki 300-0332 (JP)**
- **KOTATO, Minoru, c/o Mitsubishi Chemical Inashiki-gun, Ibaraki 300-0332 (JP)**
- **SHIGEMATSU, Yasuyuki, c/o Mitsubishi Chemical Inashiki-gun, Ibaraki 300-0332 (JP)**
- **FUSE, Tooru, c/o Mitsubishi Chemical Inashiki-gun, Ibaraki 300-0332 (JP)**
- **SATOU, Hideharu, c/o Mitsubishi Chemical Inashiki-gun, Ibaraki 300-0332 (JP)**

(74) Representative: **HOFFMANN - EITLE**
**Patent- und Rechtsanwälte**
**Arabellastrasse 4**
**81925 München (DE)**

# (54) NONAQUEOUS ELECTROLYTIC LIQUIDS AND LITHIUM SECONDARY BATTERY EMPLOYING THE SAME

(57) The present invention is directed to a non-aqueous electrolyte for lithium secondary battery, having both flame retardancy (self-extinguishing property) or nonflammability (having no flash point) and high conductivity and being electrochemically stable, and a lithium secondary battery using the non-aqueous electrolyte. Specifically, the non-aqueous electrolyte of the present invention comprises a non-aqueous solvent which comprises (a) at least one phosphate selected from (a1) a chain state phosphate and (a2) a cyclic phosphate as an essential component, and which may contain (b1) a cyclic carboxylate and (b2) a cyclic carbonate. Further, the non-aqueous electrolyte comprises the above non-aqueous solvent which further comprises (c1) a vinylene carbonate compound and/or (c2) a vinylethylene carbonate compound, and at least one compound selected from the group consisting of (d1) a cyclic amide compound, (d2) a cyclic carbamate compound, and (d3) a heterocyclic compound.

Fig. 1

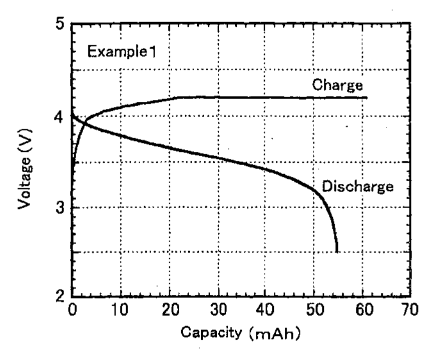


EP 1 357 628 A1

## Description

Field of the Invention

The present invention relates to a non-aqueous electrolyte for lithium secondary battery, comprising a non-aqueous solvent having dissolved therein a lithium salt, and a lithium secondary battery using the same. Specifically, the non-aqueous electrolyte of the present invention comprises a non-aqueous solvent which comprises (a) at least one phosphate (phosphoric acid ester) selected from (a1) a chain state phosphate and (a2) a cyclic phosphate as an essential component, and which may contain (b1) a cyclic carboxylate (carboxylic acid ester) and (b2) a cyclic carbonate (carbonic acid ester). Further, the non-aqueous electrolyte comprises the above non-aqueous solvent which further comprises (c1) a vinylene carbonate compound and/or (c2) a vinylethylene carbonate compound, or at least one compound selected from the group consisting of (d1) a cyclic amide compound, (d2) a cyclic carbamate compound, and (d3) a heterocyclic compound.

The non-aqueous electrolyte of the present invention has flame retardancy (self-extinguishing property) or nonflammability (having no flash point) and high conductivity as well as electrochemical stability. In addition, the secondary battery using the non-aqueous electrolyte of the present invention exhibits excellent battery charge-discharge characteristics and extremely high battery safety.

Background Art

Lithium secondary batteries using a carbonaceous material such as graphite as an anode active material, and a lithium transition metal composite oxide such as $LiCoO_2$, $LiNiO_2$ or $LiMn_2O_4$ as a cathode active material have shown a rapid growth as a novel type of small-sized secondary battery with a voltage as high as 4V level and a high energy density. In such lithium secondary batteries, there are generally used electrolytes obtained by dissolving a lithium salt in a mixed organic solvent comprising a solvent having a high permitivity such as ethylene carbonate or propylene carbonate, and a solvent having a low viscosity such as dimethyl carbonate or diethyl carbonate.

Lithium secondary batteries using these organic non-aqueous electrolytes are liable to cause ignition and combustion when the electrolyte leaks due to damage of the battery or an elevated internal pressure of the battery from a certain reason.

For solving such a problem, studies have been made intensively for imparting flame retardancy to the electrolyte by means of incorporating a flame retardant into the organic non-aqueous electrolyte. It has been well known that a phosphate (phosphoric acid ester) is used as a flame retardant electrolyte for lithium battery. For example, Japanese Provisional Patent Publications No. 206078/1983, No. 23973/1985, No. 227377/1986, No. 284070/1986, and No. 184870/1992 disclose the use of $O=P(OR)_3$-type chain state phosphates such as trimethyl phosphate, triethyl phosphate, tributyl phosphate and tris(2-chloroethyl) phosphate. Further, Japanese Prov. Patent Publication No. 88023/1996 discloses an electrolyte comprising $O=P(OR)_3$ wherein at least one of R's is a halogen-substituted alkyl and having a self-extinguishing property.

An electrolyte formulating therein trimethyl phosphate among the above phosphates is advantageous in that the electrolyte has excellent flame retardancy, however, it has a disadvantage in that it is likely to be decomposed by reduction depending on materials to be used for the negative electrode (e.g., natural graphite and synthetic graphite). For this reason, when the amount of trimethyl phosphate incorporated into the electrolyte is increased, charge-discharge characteristics of the resultant battery, for example, a charge-discharge efficiency and a discharge capacity do not meet the requirements for products in recent years.

In addition, an electrolyte formulating therein a phosphate having in the molecule thereof a halogen atom such as chlorine or bromine among the above phosphates, is disadvantageous in that it has a poor redox resistance. Therefore, when such an electrolyte is applied to 4V level secondary batteries which generate high voltage, a battery having sufficient charge-discharge characteristics cannot be obtained. Further, a minute amount of free halogen ions present in the electrolyte as impurities corrode aluminum used as a current collector for positive electrode, leading to deterioration of the battery properties.

On the other hand, the above-referenced Japanese Provisional Patent Publication No. 184870/1992 discloses the use of a cyclic phosphate as an electrolyte. Further, Japanese Provisional Patent Publication No. 67267/1999 discloses an electrolyte for lithium battery using 20 to 55% by volume of a cyclic phosphate, together with a cyclic carbonate (carbonic acid ester). However, for imparting flame retardancy to the electrolyte of this system, it is necessary to incorporate 20% by volume or more of a cyclic phosphate into the electrolyte. Thus, the electrolyte poses a problem that the electric conductivity is lowered as the amount of the cyclic phosphate incorporated is increased.

Japanese Provisional Patent Publications No. 260401/1999 and No.12080/2000 disclose that, when a phosphate is used (in an electrolyte) together with a vinylene carbonate derivative or a specific cyclic carbonate, the resultant battery is improved in charge-discharge characteristics while securing flame retardancy. However, when the lithium

secondary battery is misused or improperly used, there is a possibility that the battery is placed in a high temperature atmosphere or the battery itself reaches to a high temperature due to its internal short-circuiting or external short-circuiting. In such cases, it is suggested that a thermal decomposition reaction takes place in the battery. That is, when the battery is placed in a high temperature condition of 100°C or higher, it is suggested there is a possibility of extremely large heat generation and decomposed gases generationin a conventional electrolyte comprising ethylene carbonate, propylene carbonate, dimethyl carbonate, or diethyl carbonate as a main solvent . Therefore, from the viewpoint of improving the safety of the batteries, an electrolyte having flame retardancy or nonflammability has been sought for.

Disclosure of the Invention

The present invention has been made with a view toward solving the above-mentioned problems, and an object thereof is to provide a non-aqueous electrolyte for lithium secondary battery, having flame retardancy (self-extinguishing property) or nonflammability (having no flash point) and high conductivity and being electrochemically stable. Further, another object of the present invention is to provide a lithium secondary battery using the above non-aqueous electrolyte which exhibits excellent charge-discharge characteristics and satisfies both of safety and reliability of a battery.

In the present invention, the flame retardancy means exhibiting a self-extinguishing property under the conditions in which a long strip of glass fiber filter paper with a width of 15 mm, a length of 300 mm and a thickness of 0.19 mm is immersed in an electrolyte held in a beaker for 10 minutes or longer to let the glass fiber filter paper impregnated with the electrolyte completely, and it is vertically suspended with a clip at its end, heated with a small gas flame by means of a lighter from the bottom for about three seconds, and then, the fire source is removed. Further, in the present invention, the nonflammability (having no flash point) means that a non-aqueous electrolyte has no flash point when a flash point is measured in accordance with JIS K-2265.

In view of the above, the present inventors have made extensive and intensive studies. As a result, it has been found that, by using a non-aqueous solvent comprising (a) at least one phosphate selected from (a1) a chain state phosphate and (a2) a cyclic phosphate as an essential component, and optionally (b1) a cyclic carboxylate, or (b1) a cyclic carboxylate and (b2) a cyclic carbonate, or using the above non-aqueous solvent further comprising (c1) a vinylene carbonate compound and/or (c2) a vinylethylene carbonate compound or at least one compound selected from the group consisting of (d1) a cyclic amide compound, (d2) a cyclic carbamate compound, and (d3) a heterocyclic compound, a non-aqueous electrolyte having flame retardancy or nonflammability and excellent conductivity as well as electrochemical stability can be obtained, and thus, the present invention has been completed. Further, it has been found that, when the non-aqueous electrolyte of the present invention is used in a secondary battery, there can be realized a secondary battery which is advantageous not only in that it has excellent battery charge-discharge characteristics, but also in that it exhibits extremely high safety due to the reduced decomposition rate (exotherm rate, pressure elevation rate) when a thermal decomposition takes place in the battery or due to the electrolyte having no flash point.

Non-aqueous electrolyte 1 of the present invention is a non-aqueous electrolyte for a lithium secondary battery to be used in combination with a positive electrode and a negative electrode capable of storing and releasing lithium, which comprises a non-aqueous solvent and a lithium saltdissloved therein, wherein the non-aqueous solvent comprises: (a) a phosphate comprising both (a1) a chain state phosphate and (a2) a cyclic phosphate; and (b1) a cyclic carboxylate.

Non-aqueous electrolyte 2 of the present invention is a non-aqueous electrolyte, wherein the non-aqueous solvent comprises: (a) at least one phosphate selected from (a1) a chain state phosphate and (a2) a cyclic phosphate; (b1) a cyclic carboxylate; and at least one compound selected from (c1) a vinylene carbonate compound and (c2) a vinylethylene carbonate compound.

Non-aqueous electrolyte 3 of the present invention is a non-aqueous electrolyte, wherein the non-aqueous solvent comprises: (a) at least one phosphate selected from (a1) a chain state phosphate and (a2) a cyclic phosphate; at least one compound selected from (c1) a vinylene carbonate compound and (c2) a vinylethylene carbonate compound; and at least one compound selected from the group consisting of (d1) a cyclic amide compound, (d2) a cyclic carbamate compound, and (d3) a heterocyclic compound.

Non-aqueous electrolyte 4 of the present invention is a non-aqueous electrolyte, wherein the non-aqueous solvent comprises: (a) at least one phosphate selected from (a1) a chain state phosphate and (a2) a cyclic phosphate; and (c1) a vinylene carbonate compound and (c2) a vinylethylene carbonate compound.

Brief Description of the Drawings

Fig. 1 is a graph showing a charge-discharge curve in the first cycle with respect to the cylindrical-form battery

element produced by using a non-aqueous electrolyte 1 prepared in Example 1.

Fig. 2 is a graph showing a thermal stability (change in cell temperature) with respect to the cylindrical-form battery element produced by using a non-aqueous electrolyte 1 prepared in Example 1.

Fig. 3 is a graph showing a thermal stability (change in pressure) with respect to the cylindrical-form battery element produced by using a non-aqueous electrolyte 1 prepared in Example 1.

Fig. 4 is a graph showing the charge-discharge curve in the first cycle with respect to the cylindrical-form battery element produced by using a non-aqueous electrolyte 2 prepared in Example 9.

Fig. 5 is a graph showing the thermal stability, (change in cell temperature) with respect to the cylindrical-form battery element produced by using a non-aqueous electrolyte 2 prepared in Example 9.

Fig. 6 is a graph showing the thermal stability (change in pressure) with respect to the cylindrical-form battery element produced by using a non-aqueous electrolyte 2 prepared in Example 9.

Fig. 7 is a graph showing the cycle characteristics of discharge capacity retaining ratio with respect to the coin-form batteries produced by using a non-aqueous electrolytes 3 prepared in Examples 20 and 27 and Comparative Example 9.

Best Mode for carrying out the Invention

Hereinbelow, the present invention will be described in detail.

[Non-aqueous electrolyte 1]

A non-aqueous electrolyte 1 of the present invention comprises a non-aqueous solvent which comprises (a) a phosphate (phosphoric acid ester) comprising both (a1) a chain state phosphate and (a2) a cyclic phosphate and (b1) a cyclic carboxylate (carboxylic acid ester), and a lithium salt being dissolved therein.

The phosphate (a) contained in the non-aqueous solvent comprises both the chain state phosphate (a1) and the cyclic phosphate (a2). Examples of the chain state phosphates (a1) include chain state phosphates represented by the following formula (I):

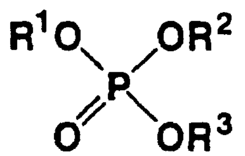

(I)

(wherein $R^1$ to $R^3$ each independently represent an unsubstituted or fluorine-substituted, straight or branched alkyl group having 1 to 4 carbon atoms).

Examples of the cyclic phosphates (a2) include cyclic phosphates represented by the following formula (II):

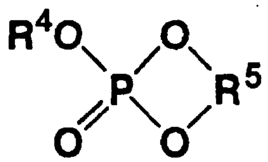

(II)

(wherein $R^4$ represents an unsubstituted or fluorine-substituted, straight or branched alkyl group having 1 to 4 carbon atoms, and $R^5$ represents a straight or branched alkylene group having 2 to 8 carbon atoms).

When $R^1$ to $R^3$ in the formula (I) for the chain state phosphate (a1) are alkyl groups, examples of which may include a methyl group, an ethyl group, a propyl group, and a butyl group, and, when $R^1$ to $R^3$ are fluorine-substituted alkyl groups, examples of which include a trifluoroethyl group, a pentafluoropropyl group, a hexafluoroisopropyl group, and a heptafluorobutyl group. It is preferred that the sum of the carbon atoms contained in $R^1$ to $R^3$ is 3 to 7. Examples of the chain state phosphates (a1) of the formula (I) include trimethyl phosphate, triethyl phosphate, dimethylethyl phosphate, dimethylpropyl phosphate, dimethylbutyl phosphate, diethylmethyl phosphate, dipropylmethyl phosphate, dibutylmethyl phosphate, methylethylpropyl phosphate, methylethylbutyl phosphate, methylpropylbutyl phosphate, etc.

In the chain state phosphates (a1) of the formula (I), examples of those having a fluorine-substituted alkyl

group may include trifluoroethyldimethyl phosphate, bis(trifluoroethyl)methyl phosphate, tris(trifluoroethyl) phosphate, pentafluoropropyldimethyl phosphate, heptafluorobutyldimethyl phosphate, trifluoroethylmethylethyl phosphate, pentafluoropropylmethylethyl phosphate, heptafluorobutylmethylethyl phosphate, trifluoroethylmethylpropyl phosphate, pentafluoropropylmethylpropyl phosphate, heptafluorobutylmethylpropyl phosphate, trifluoroethylmethylbutyl phosphate, pentafluoropropylmethylbutyl phosphate, heptafluorobutylmethylbutyl phosphate, trifluoroethyldiethyl phosphate, pentafluoropropyldiethyl phosphate, heptafluorobutyldiethyl phosphate, trifluoroethylethylpropyl phosphate, pentafluoropropylethylpropyl phosphate, heptafluorobutylethylpropyl phosphate, trifluoroethylethylbutyl phosphate, pentafluoropropylethylbutyl phosphate, heptafluorobutylethylbutyl phosphate, trifluoroethyldipropyl phosphate, pentafluoropropyldipropyl phosphate, heptafluorobutyldipropyl phosphate, trifluoroethylpropylbutyl phosphate, pentafluoropropylpropylbutyl phosphate, heptafluorobutylpropylbutyl phosphate, trifluoroethyldibutyl phosphate, pentafluoropropyldibutyl phosphate, heptafluorobutyldibutyl phosphate, etc.

Of these, preferred are trimethyl phosphate, triethyl phosphate, dimethylethyl phosphate, dimethylpropyl phosphate, methyldiethyl phosphate, trifluoroethyldimethyl phosphate, bis(trifluoroethyl)methyl phosphate, tris(trifluoroethyl) phosphate, pentafluoropropyldimethyl phosphate, trifluoroethylmethylethyl phosphate, pentafluoropropylmethylethyl phosphate, trifluoroethylmethylpropyl phosphate and pentafluoropropylmethylpropyl phosphate, and especially preferred are trimethyl phosphate, trifluoroethyldimethyl phosphate, bis(trifluoroethyl)methyl phosphate and tris(trifluoroethyl) phosphate.

Examples of $R^4$ in the formula (II) for the cyclic phosphate (a2) may include a methyl group, an ethyl group, a propyl group, a butyl group, a trifluoroethyl group, a pentafluoropropyl group, a hexafluoroisopropyl group and a heptafluorobutyl group. Of these, preferred are a methyl group and an ethyl group. Examples of $R^5$ may include an ethylene group, a propylene group, a trimethylene group, a butylene group, a tetramethylene group, a 1,1-dimethylethylene group, a pentamethylene group, a 1,1,2-trimethylethylene group, a hexamethylene group, a tetramethylethylene group, a heptamethylene group, and an octamethylene group. Of these, preferred is an ethylene group.

Examples of the cyclic phosphates (a2) of the formula (II) may include methylethylene phosphate, ethylethylene phosphate, n-propylethylene phosphate, isopropylethylene phosphate, n-butylethylene phosphate, sec-butylethylene phosphate, t-butylethylene phosphate, methylpropylene phosphate, ethylpropylene phosphate, n-propylpropylene phosphate, isopropylpropylene phosphate, n-butylpropylene phosphate, sec-butylpropylene phosphate, t-butylpropylene phosphate, methyltrimethylene phosphate, ethyltrimethylene phosphate, n-propyltrimethylene phosphate, isopropyltrimethylene phosphate, n-butyltrimethylene phosphate, sec-butyltrimethylene phosphate, t-butyl-trimethylene phosphate, methylbutylene phosphate, ethylbutylene phosphate, n-propylbutylene phosphate, isopropylbutylene phosphate, n-butylbutylene phosphate, sec-butylbutylene phosphate, t-butylbutylene phosphate, methylisobutylene phosphate, ethylisobutylene phosphate, n-butylisobutylene phosphate, sec-butylisobutylene phosphate, t-butylisobutylene phosphate, methyltetramethylene phosphate, ethyltetramethylene phosphate, n-propyl-tetramethylene phosphate, isopropyltetramethylene phosphate, n-butyltetramethylene phosphate, sec-butyl-tetramethylene phosphate, t-butyltetramethylene phosphate, methylpentamethylene phosphate, ethylpentamethylene phosphate, n-propylpentamethylene phosphate, isopropylpentamethylene phosphate, n-butylpentamethylene phosphate, sec-butylpentamethylene phosphate, t-butyl-pentamethylene phosphate, methyltrimethylethylene phosphate, ethyltrimethylethylene phosphate, n-propyl-trimethylethylene phosphate, isopropyltrimethylethylene phosphate, n-butyltrimethylethylene phosphate, sec-butyl-trimethylethylene phosphate, t-butyltrimethylethylene phosphate, methylhexamethylene phosphate, ethylhexamethylene phosphate, n-propylhexamethylene phosphate, isopropylhexamethylene phosphate, n-butyl-hexamethylene phosphate, sec-butylhexamethylene phosphate, t-butylhexamethylene phosphate, methyltetramethylethylene phosphate, ethyltetramethylethylene phosphate, n-propyl-tetramethylethylene phosphate, isopropyltetramethylethylene phosphate, n-butyltetramethylethylene phosphate, sec-butyl-tetramethylethylene phosphate, t-butyltetramethylethylene phosphate, methylheptamethylene phosphate, ethylheptamethylene phosphate, n-propylheptamethylene phosphate, isopropylheptamethylene phosphate, n-butyl-heptamethylene phosphate, sec-butylheptamethylene phosphate, t-butylheptamethylene phosphate, methyloctamethylene phosphate, ethyloctamethylene phosphate, n-propyloctamethylene phosphate, isopropyloctamethylene phosphate, n-butyloctamethylene phosphate, sec-butyloctamethylene phosphate, t-butyl-octamethylene phosphate, etc. Of these, preferred are methylethylene phosphate and ethylethylene phosphate.

In the cyclic phosphates (a2) of the formula (II), examples of those having a fluorine-substituted alkyl group may include trifluoroethylethylene phosphate, pentafluoropropylethylene phosphate, hexafluoroisopropyl ethylene phosphate, heptafluorobutylethylene phosphate, trifluoroethylpropylene phosphate, pentafluoropropylpropylene phosphate, hexafluoroisopropylpropylene phosphate, heptafluorobutylpropylene phosphate, trifluoroethyltrimethylene phosphate, pentafluoropropyltrimethylene phosphate, hexafluoroisopropyltrimethylene phosphate, heptafluorobutyltrimethylene phosphate, trifluoroethylbutylene phosphate, pentafluoropropylbutylene phosphate, hexafluoroisopropylbutylene phosphate, heptafluorobutylbutylene phosphate, trifluoromethyltetramethylene phosphate, pentafluoropropyltetramethylene phosphate, hexafluoroisopropyltetramethylene phosphate, heptafluorobutyltetramethylene phosphate, trifluoromethyldimethylethylene phosphate, pentafluoropropyldimethylethylene phosphate, hexafluoroisopropyldimethylethylene phosphate, heptafluorobutyldimethylethylene phosphate, trifluoroethylpentamethylene phosphate, pentafluoropropylpentamethylene phosphate, hexafluoroisopropylpentamethylene phosphate, heptafluorobutylpentamethylene phosphate, trifluoromethyltrimethylethylene phosphate, pentafluoropropyltrimethylethylene phosphate, hexafluoroisopropyltrimethylethylene phosphate, heptafluorobutyltrimethylethylene phosphate, trifluoroethylhexamethylene phosphate, pentafluoropropylhexamethylene phosphate, hexafluoroisopropylhexamethylene phosphate, heptafluorobutylhexamethylene phosphate, trifluoromethyltetramethylethylene phosphate, pentafluoropropyltetramethylethylene phosphate, hexafluoroisopropyltetramethylethylene phosphate, heptafluorobutyltetramethylethylene phosphate, trifluoroethylheptamethylene phosphate, pentafluoropropylheptamethylene phosphate, hexafluoroisopropylheptamethylene phosphate, heptafluorobutylheptamethylene phosphate, trifluoromethyloctamethylene phosphate, pentafluoropropyloctamethylene phosphate, hexafluoroisopropyloctamethylene phosphate, heptafluorobutyloctamethylene phosphate, etc. Of these, preferred is trifluoroethylethylene phosphate.

The above-mentioned chain state phosphates (a1) can be used individually or in combination. Similarly, the above cyclic phosphates (a2) can be used individually or in combination.

In addition to the phosphate (a) comprising the chain state phosphate (a1) and the cyclic phosphate (a2), the non-aqueous electrolyte 1 of the present invention contains a cyclic carboxylate (b1) Examples of the cyclic carboxylates (b1) may include γ-butyrolactone, γ-valerolactone, γ-caprolactone, γ-octanolactone, β-butyrolactone, δ-valerolactone, and ε-caprolactone. These can be used individually or in combination. Especially preferred are γ-butyrolactone, δ-valerolactone, ε-caprolactone, etc.

The chain phosphate (a1) is contained in the non-aqueous electrolyte 1 of the present invention in an amount of 10 to 60% by volume, preferably 15 to 60% by volume, more preferably 15 to 55% by volume, based on the total volume of the chain state phosphate (a1) and the cyclic carboxylate (b1). The above percentages by volume are obtained by using the volume of each component measured at 25°C. Further, a content of the cyclic phosphate (a2) in the non-aqueous electrolyte 1 of the present invention is preferably 0.1 to 10% by weight, more preferably 0.5 to 10% by weight, further preferably 1 to 10% by weight, based on the total weight of the chain state phosphate (a1), the cyclic phosphate (a2), and the cyclic carboxylate (b1).

The non-aqueous electrolyte 1 of the present invention may further contain other organic solvents which have been conventionally used in the electrolyte for lithium secondary batteries as long as it is used in a scope of the object of the present invention. Examples of these organic solvents may include cyclic carbonates such as ethylene carbonate, propylene carbonate, butylene carbonate, etc.; chain state carboxylates such as methyl acetate, ethyl acetate, methyl propionate, ethyl propionate, etc.; chain state ethers such as 1,2-dimethoxyethane, 1,2-diethoxyethane, 1-ethoxy-2-methoxyethane, 1,2-dipropoxyethane, etc.; cyclic ethers such as tetrahydrofuran, 2-methyltetrahydrofuran, 3-methyltetrahydrofuran, 2,5-dimethyltetrahydrofuran, tetrahydropyran, etc.; amides such as dimethylformamide, dimethylacetamide, etc.; sulfites such as dimethyl sulfite, diethyl sulfite, ethylene sulfite, propylene sulfite, etc.; sulfates such as dimethyl sulfate, diethyl sulfate, ethylene sulfate, propylene sulfate, etc.; sulfoxides such as dimethyl sulfoxide, diethyl sulfoxide, etc.; acetonitrile, propionitrile, etc. The non-aqueous solvent may contain a solvent with flame retardancy or nonflammability such as a halogen type solvent, e.g., a halogen atom-substituted carbonate, carboxylate, ether, etc., a room-temperature molten salt, e.g., an imidazolium salt, a pyridinium salt, etc., or a phosphazene type solvent, etc. These organic solvents can be used individually or in combination.

In the non-aqueous electrolyte 1 of the present invention, as the lithium salt which is a solute, an inorganic acid lithium salt selected from $LiPF_6$ and $LiBF_4$, or an organic acid lithium salt selected from the group consisting of $LiCF_3SO_3$, LiN $(CF_3SO_2)_2$, LiN $(C_2F_5SO_2)_2$, $LiN(CF_3SO_2)$ $(C_4F_9SO_2)$, $LiPF_3(C_2F_5)_3$, and $LiB(CF_3COO)_4$ can be used. By using these salts, not only an electrolyte having high conductivity and excellent electrochemical properties can be obtained, but also a battery having excellent charge-discharge capacity and excellent charge-discharge cycle characteristics can be obtained. Further, the lithium salt is used so that the solute concentration of the non-aqueous electrolyte generally becomes in the range of from 0.5 to 2 mol/$dm^3$, preferably 0.5 to 1.5 mol/$dm^3$. When the lithium salt concentration falls in the above range, a non-aqueous electrolyte having a preferred conductivity can be obtained.

[Non-aqueous electrolyte 2]

A non-aqueous electrolyte 2 of the present invention comprises a non-aqueous solvent which comprises (a) at least one phosphate selected from (a1) a chain state phosphate and (a2) a cyclic phosphate and (b1) a cyclic carboxylate, and contained therein at least one compound selected from (c1) a vinylene carbonate compound and (c2) a vinylethylene carbonate compound, and a lithium salt being dissolved therein.

The chain phosphate (a1), the cyclic phosphate (a2), and the cyclic carboxylate (b1) contained in the non-aqueous electrolyte 2 of the present invention are the same as those mentioned in connection with the non-aqueous electrolyte 1.

It is preferred that the phosphate (a) is contained in the non-aqueous electrolyte 2 in an amount of 10 to 90% by volume, based on the total volume of the phosphate (a), i.e., the chain state phosphate (a1) and the cyclic phosphate

(a2) and the cyclic carboxylate (b1).

The non-aqueous electrolyte 2 is a non-aqueous electrolyte containing at least one compound selected from a vinylene carbonate compound (c1) and a vinylethylene carbonate compound (c2). By means of containing these compounds, the resultant battery is improved in charge-discharge characteristics, that is, charge-discharge efficiency and charge-discharge capacity.

Examples of the vinylene carbonate compounds (c1) may include vinylene carbonate compounds represented by the following formula (III):

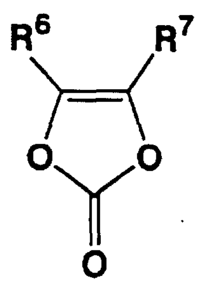

(III)

(wherein $R^6$ and $R^7$ each independently represent a hydrogen atom, or an alkyl group having 1 to 4 carbon atoms, or a branched alkyl group),
and examples of the vinylethylene carbonate compounds (c2) may include vinylethylene carbonate compounds represented by the following formula (IV):

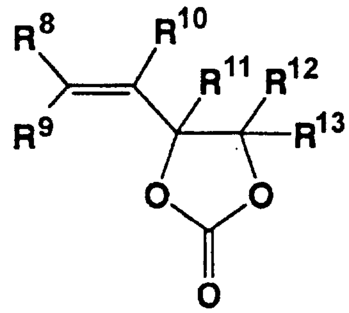

(IV)

(wherein $R^8$ to $R^{13}$ each independently represent a hydrogen atom, or a linear or branched alkyl group having 1 to 4 carbon atoms).
Specific examples of the alkyl group represented by $R^6$ to $R^{13}$ may include a methyl group, an ethyl group, a n-propyl group, an i-propyl group, a n-butyl group, a sec-butyl group, and a t-butyl group, and preferred are a methyl group and an ethyl group.

Examples of the vinylene carbonate compounds (c1) of the formula (III) may include vinylene carbonate, 4-methylvinylene carbonate, 4-ethylvinylene carbonate, 4,5-dimethylvinylene carbonate, 4,5-diethylvinylene carbonate, 4-methyl-5-ethylvinylene carbonate, etc. These can be used individually or in combination. Of these, preferred is vinylene carbonate.

Examples of the vinylethylene carbonate compounds (c2) of the formula (VI) may include 4-vinylethylene carbonate, 4-vinyl-4-methylethylene carbonate, 4-vinyl-4-ethylethylene carbonate, 4-vinyl-4-n-propylethylene carbonate, 4-vinyl-5-methylethylene carbonate, 4-vinyl-5-ethylethylene carbonate, 4-vinyl-5-n-propylethylene carbonate, etc. These can be used individually or in combination. Of these, preferred are 4-vinylethylene carbonate and 4-vinyl-4-methylethylene carbonate, and especially preferred is 4-vinylethylene carbonate.

A content of at least one compound selected from the vinylene carbonate compound (c1) and the vinylethylene carbonate compound (c2) is preferably in the range of 0.1 to 15% by weight, especially preferably 0.5 to 12% by weight, based on the total weight of the non-aqueous electrolyte 2.

The non-aqueous electrolyte 2 of the present invention may further contain other organic solvents, which have been conventionally used in the electrolyte for lithium secondary batteries and which are described above in connection with the non-aqueous electrolyte 1, as long as it is used in a scope of the object of the present invention. In addition, the lithium salts used in the non-aqueous electrolyte 2 of the present invention are the same as those used

in the non-aqueous electrolyte 1.

[Non-aqueous electrolyte 3]

A non-aqueous electrolyte 3 of the present invention comprises a non-aqueous solvent which comprises (a) at least one phosphate selected from (a1) a chain state phosphate and (a2) a cyclic phosphate, and contained therein at least one compound selected from (c1) a vinylene carbonate compound and (c2) a vinylethylene carbonate compound, and at least one compound selected from the group consisting of (d1) a cyclic amide compound, (d2) a cyclic carbamate compound and (d3) a heterocyclic compound, and a lithium salt dissolved in the non-aqueous electrolyte 3.
The non-aqueous electrolyte 3 may further comprise a cyclic carboxylate (b1). In this case, the phosphate (a) is preferably contained in the non-aqueous electrolyte 3 in an amount of 10% by volume to less than 100% by volume, more preferably 15 to 95% by volume, further preferably 20 to 90% by volume, based on the total volume of the phosphate (a) and the cyclic carboxylate (b1).
The chain state phosphate (a1) the cyclic phosphate (a2), the vinylene carbonate compound (c1), and the vinylethylene carbonate compound (c2) contained in the non-aqueous electrolyte 3 as well as the optionally contained cyclic carboxylate (b1) are the same as those mentioned above in connection with the non-aqueous electrolytes 1 and 2.
The non-aqueous electrolyte 3 of the present invention contains at least one compound selected from the group consisting of a cyclic amide compound (d1), a cyclic carbamate compound (d2), and a heterocyclic compound (d3). By using a non-aqueous electrolyte containing these compounds, the battery can be improved in charge-discharge characteristics, i.e., charge-discharge efficiency and charge-discharge capacity.
Examples of the cyclic amide compounds (d1) may include cyclic amide compounds represented by the following formula (V):

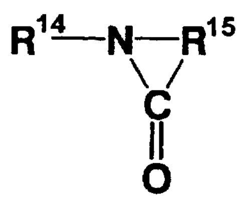

(V)

(wherein $R^{14}$ represents a straight or branched alkyl group having 1 to 4 carbon atoms, a vinyl group or an allyl group, or a cycloalkyl group, an aryl group or an aralkyl group having 6 to 8 carbon atoms, and $R^{15}$ represents a divalent hydrocarbon group having 2 to 8 carbon atoms). In the above cyclic amide compounds (d1), examples of $R^{14}$ may include a methyl group, an ethyl group, a n-propyl group, an i-propyl group, a n-butyl group, a sec-butyl group, and a t-butyl group. Of these, preferred are a methyl group and an ethyl group. Examples of $R^{15}$ may include straight or branched alkylene groups, such as an ethylene group, a propylene group, a trimethylene group, a butylene group, a tetramethylene group, a 1,1-dimethylethylene group, a pentamethylene group, a 1,1,2-trimethylethylene group, a hexamethylene group, a tetramethylethylene group, a heptamethylene group, an octamethylene group, etc. Of these, preferred are an ethylene group, a trimethylene group, a tetramethylene group and a pentamethylene group.
Specific examples of the cyclic amide compounds (d1) of the formula (V) may include compounds having a pyrrolidone skeleton such as 1-methyl-2-pyrrolidone, 1-ethyl-2-pyrrolidone, 1-n-propyl-2-pyrrolidone, 1-isopropyl-2-pyrrolidone, 1-n-butyl-2-pyrrolidone, 1-vinyl-2-pyrrolidone, 1-allyl-2-pyrrolidone, 1-cyclohexyl-2-pyrrolidone, 1-phenyl-2-pyrrolidone, 1-benzyl-2-pyrrolidone, etc.; compounds having a piperidone skeleton such as 1-methyl-2-piperidone, 1-ethyl-2-piperidone, 1-n-propyl-2-piperidone, 1-isopropyl-2-piperidone, 1-n-butyl-2-piperidone, 1-vinyl-2-piperidone, 1-allyl-2-piperidone, 1-cyclohexyl-2-piperidone, 1-phenyl-2-piperidone, and 1-benzyl-2-piperidone; and compounds having a caprolactam skeleton, such as 1-methyl-2-caprolactam, 1-ethyl-2-caprolactam, 1-n-propyl-2-caprolactam, 1-isopropyl-2-caprolactam, 1-n-butyl-2-caprolactam, 1-vinyl-2-caprolactam, 1-allyl-2-caprolactam, 1-cyclohexyl-2-caprolactam, 1-phenyl-2-caprolactam, 1-benzyl-2-caprolactam, etc. These can be used individually or in combination.
Preferred specific examples of the cyclic amide compounds (d1) may include 1-methyl-2-pyrrolidone, 1-ethyl-2-pyrrolidone, 1-vinyl-2-pyrrolidone, 1-allyl-2-pyrrolidone, 1-methyl-2-piperidone, 1-ethyl-2-piperidone, 1-methyl-2-caprolactam and 1-ethyl-2-caprolactam.
Especially preferred examples of the cyclic amide compounds (d1) may include 1-methyl-2-pyrrolidone, 1-ethyl-2-pyrrolidone, 1-vinyl-2-pyrrolidone, 1-allyl-2-pyrrolidone, 1-methyl-2-caprolactam and 1-ethyl-2-caprolactam.
Examples of the cyclic carbamate compounds (d2) may include cyclic carbamate compounds represented by the following formula (VI):

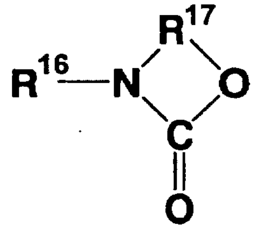

(VI)

(wherein $R^{16}$ represents a straight or branched alkyl group having 1 to 4 carbon atoms, a vinyl group or an allyl group, or a cycloalkyl group, an aryl group or an aralkyl group having 6 to 8 carbon atoms, and $R^{17}$ represents a hydrocarbon group having 2 to 8 carbon atoms). In the above cyclic carbamate compounds (d2), examples of $R^{16}$ may include a methyl group, an ethyl group, a n-propyl group, an i-propyl group, a n-butyl group, a sec-butyl group, and a t-butyl group. Of these, preferred are a methyl group and an ethyl group. Examples of $R^{17}$ may include straight or branched alkylene groups such as an ethylene group, a propylene group, a trimethylene group, a butylene group, a tetramethylene group, a 1,1-dimethylethylene group, a pentamethylene group, a 1,1,2-trimethylethylene group, a hexamethylene group, a tetramethylethylene group, a heptamethylene group, and an octamethylene group. Of these, preferred is an ethylene group.

Specific examples of the cyclic, carbamate compounds (d2) of the formula (VI) may include compounds having an oxazolidone skeleton such as 3-methyl-2-oxazolidone, 3-ethyl-2-oxazolidone, 3-n-propyl-2-oxazolidone, 3-isopropyl-2-oxazolidone, 3-n-butyl-2-oxazolidone, 3-vinyl-2-oxazolidone, 3-allyl-2-oxazolidone, 3-cyclohexyl-2-oxazolidone, 3-phenyl-2-oxazolidone, 3-benzyl-2-oxazolidone, etc. These can be used individually or in combination. Preferred specific examples of the cyclic carbamate compounds (d2) may include 3-methyl-2-oxazolidone, 3-ethyl-2-oxazolidone, 3-vinyl-2-oxazolidone, and 3-allyl-2-oxazolidone, and especially preferred are 3-methyl-2-oxazolidone and 3-ethyl-2-oxazolidone.

Examples of the heterocyclic compounds (d3) may include heterocyclic compounds represented by the following formula (VII):

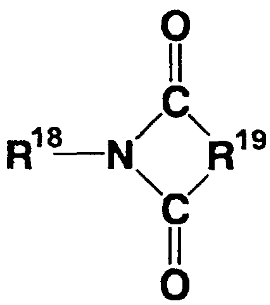

(VII)

(wherein $R^{18}$ represents a straight or branched alkyl group having 1 to 4 carbon atoms, a vinyl group or an allyl group, or a cycloalkyl group, an aryl group or an aralkyl group having 6 to 8 carbon atoms, and $R^{19}$ represents a hydrocarbon group having 2 to 8 carbon atoms). In the above heterocyclic compounds (d3), examples of $R^{18}$ include a methyl group, an ethyl group, a n-propyl group, an i-propyl group, a n-butyl group, a sec-butyl group, and a t-butyl group. Of these, preferred are a methyl group and an ethyl group. Examples of $R^{19}$ may include straight or branched alkylene groups such as an ethylene group, a propylene group, a trimethylene group, a butylene group, a tetramethylene group, a 1,1-dimethylethylene group, a pentamethylene group, a 1,1,2-trimethylethylene group, a hexamethylene group, a tetramethylethylene group, a heptamethylene group and an octamethylene group. Of these, preferred is an ethylene group. In addition, examples of $R^{19}$ may include straight or branched alkenylene groups, and, of these, preferred is a vinylene group. Further, examples of $R^{19}$ may include substituted or unsubstituted phenylene groups.

Examples of the heterocyclic compounds (d3) of the formula (VII) may include compounds having a succinimide skeleton such as N-methyl-succinimide, N-ethyl-succinimide, N-n-propyl-succinimide, N-isopropyl-succinimide, N-n-butyl-succinimide, N-vinyl-succinimide, N-allyl-succinimide, N-cyclohexyl-succinimide, N-phenyl-succinimide, N-benzyl-succinimide, etc.; compounds having a phthalimide skeleton, such as N-methyl-phthalimide, N-ethyl-phthalimide, N-n-propyl-phthalimide, N-isopropyl-phthalimide, N-n-butyl-phthalimide, N-vinyl-phthalimide, N-allyl-phthalimide, N-cyclohexyl-phthalimide, N-phenyl-phthalimide, N-benzyl-phthalimide, etc.; and compounds having a maleimide skeleton such as N-methyl-maleimide, N-ethyl-maleimide, N-n-propyl-maleimide, N-isopropyl-maleimide, N-n-butyl-maleimide, N-vinyl-maleimide, N-allyl-maleimide, N-cyclohexyl-maleimide, N-phenyl-maleimide, N-benzyl-maleimide, etc. These can be used individually or in combination.

Preferred specific examples of the heterocyclic compounds (d3) may include N-methyl-succinimide, N-ethyl-succinimide, N-vinyl-succinimide, N-allyl-succinimide, N-methyl-phthalimide, N-ethyl-phthalimide, N-vinyl-phthalimide, N-allyl-phthalimide, N-methyl-maleimide and N-ethyl-maleimide. Of these, especially preferred are N-methyl-succinimide, N-ethyl-succinimide, N-methyl-phthalimide and N-ethyl-phthalimide.

Each of the cyclic amide compounds (d1) of the formula (V), the cyclic carbamate compounds (d2) of the formula (VI) and the heterocyclic compounds (d3) of the formula (VII) can be used individually or in combination. A content of at least one compound selected from the cyclic amide compound (d1), the cyclic carbamate compound (d2) and the heterocyclic compound (d3) is preferably in the range of 0.1 to 15% by weight, more preferably 0.5 to 12% by weight, especially preferably 0.1 to 10% by weight, based on the total weight of the non-aqueous electrolyte.

The non-aqueous electrolyte 3 of the present invention may further contain other organic solvents, which have been conventionally used in the electrolyte for lithium secondary batteries and which are described above in connection with the non-aqueous electrolyte 1, as long as it is used in a scope of the object of the present invention. In addition, the lithium salts used in the non-aqueous electrolyte 3 of the present invention are the same as those used in the non-aqueous electrolyte 1.

[Non-aqueous electrolyte 4]

A non-aqueous electrolyte 4 of the present invention comprises a non-aqueous solvent which comprises (a) at least one phosphate selected from (a1) a chain state phosphate and (a2) a cyclic phosphate, and contained therein (c1) a vinylene carbonate compound and (c2) a vinylethylene carbonate compound, and a lithium salt dissolved in the non-aqueous electrolyte 4.

The above-mentioned non-aqueous electrolyte 4 may further comprise at least one compound selected from a cyclic carboxylate (b1) and a cyclic carbonate (b2). In this case, the phosphate (a) is preferably contained in the non-aqueous electrolyte 4 in an amount of 60% by weight to less than 100% by volume, more preferably 65 to 95% by volume, especially preferably 70 to 90% by volume, based on the total volume of the phosphate (a) and at least one compound selected from the cyclic carboxylate (b1) and the cyclic carbonate (b2).

The chain state phosphate (a1), the cyclic phosphate (a2), the vinylene carbonate compound (c1), and the vinylethylene carbonate compound (c2) contained in the non-aqueous electrolyte 4 as well as the optionally contained cyclic carboxylate (b1) are the same as those mentioned above in connection with the non-aqueous electrolytes 1 and 2.

Examples of the cyclic carbonates (b2) may include ethylene carbonate, propylene carbonate, butylene carbonate, etc. These can be used individually or in combination. Especially preferred are ethylene carbonate and propylene carbonate.

The non-aqueous electrolyte 4 of the present invention may further contain other organic solvents, which have been conventionally used in the electrolyte for lithium secondary batteries and which are described above in connection with the non-aqueous electrolyte 1, as long as it is used in a scope of the object of the present invention. In addition, the lithium salts used in the non-aqueous electrolyte 4 of the present invention are the same as those used in the non-aqueous electrolyte 1.

[Lithium secondary battery]

The lithium secondary battery of the present invention comprises any one of the above-described non-aqueous electrolytes 1 to 4 of the present invention, and combined therewith a negative electrode and a positive electrode.

<Anode material>

In the negative electrode constituting the battery, with respect to the anode material, there is no particular limitation as long as it is comprised of a material capable of storing and releasing lithium. As the anode material, known carbonaceous materials can be used, and examples include coke, glass-form carbon, synthetic graphite, natural graphite, non-graphitizable carbon, pyrolyzed carbon, and carbon fiber.

Specific examples of the carbonaceous materials may include pyrolyzates of organic materials obtained by pyrolysis under various conditions, and graphite carbonaceous materials, such as synthetic graphite and natural graphite. Among these, preferred examples may include natural graphite, synthetic graphite and mechanically pulverized products and reheated products thereof; reheated products of foamed graphite; powder obtained from high-purity refined products of these; and graphite carbonaceous materials including the above graphite and pitch, obtained by subjecting to various surface treatments. These can be used individually or in combination.

The graphite carbonaceous material preferably has a plane spacing $d_{002}$ value of the (002) plane of 0.335 to 0.34 nm, more preferably 0.335 to 0.337 nm, as measured by X-ray diffractometry in accordance with the method proposed by Japan Society for the Promotion of Science. The graphite carbonaceous material preferably contains ash in an amount of 1% by weight or less, more preferably 0.5% by weight or less, especially preferably 0.1% by weight or less, based on the weight of the graphite carbonaceous material. The graphite carbonaceous material preferably has a crystallite size (Lc) of 30 nm or more, more preferably 50 nm or more, especially preferably 100 nm or more, as measured by X-ray diffractometry in accordance with the method proposed by Japan Society for the Promotion of Science. The graphite carbonaceous material has a median diameter of 1 to 100 μm, preferably 3 to 50 μm, more preferably 5 to 40 μm, especially preferably 7 to 30 μm, as measured by a laser diffraction scattering method. The graphite carbonaceous material has a specific surface area of 0.5 to 25.0 $m^2/g$, preferably 0.7 to 20.0 $m^2/g$, more preferably 1.0 to 15.0 $m^2/g$, especially preferably 1.5 to 10.0 $m^2/g$, as measured by a BET method. In addition, in Raman spectroscopy using an argon ion laser, an intensity ratio R represented by IB/IA is 0 to 0.5 wherein IA is a peak intensity of a peak PA appearing in the range of from 1,570 to 1,620 $cm^{-1}$, and IB is a peak intensity of a peak PB appearing in the range of from 1,350 to 1,370 $cm^{-1}$, and a half band width of a peak appearing in the range of from 1,580 to 1,620 $cm^{-1}$ is 26 $cm^{-1}$ or less, more preferably 25 $cm^{-1}$ or less.

When the non-aqueous electrolyte of the present invention is used together with a negative electrode which comprises an anode material comprising graphite carbonaceous material (A) and carbonaceous material (B) having plane spacing $d_{002}$ values of the (002) plane of less than 0.337 nm and 0.337 nm or more, respectively, as measured by wide-angle X-ray diffractometry (XRD), the resultant battery is advantageously improved in charge-discharge characteristics. Further, it is especially preferred that graphite carbonaceous material (A) has a part or all of a surface thereof coated with carbonaceous material (B).

This graphite carbonaceous material (A) is a highly crystalline graphite carbonaceous material having a plane spacing $d_{002}$ value of the (002) plane of less than 0.337 nm as measured by XRD. This material preferably has an intensity ratio ABC(101)/AB(101) value of 0.2 or more, more preferably 0.3 or more, especially preferably 0.4 or more, wherein AB(101) represents the intensity of a peak ascribed to the orientation of the hexagonal crystal system graphite layer, i.e., AB stacking layer, and ABC(101) represents the intensity of a peak ascribed to the orientation of the rhombohedral crystal system graphite layer, i.e., ABC stacking layer, as measured by powder XRD with respect to the (101) plane. This is because when the ABC stacking increases, a so-called turbostratic structure is formed, and the intercalation of lithium into the graphite layers is suppressed, thus preventing peeling of carbon layers due to solvent decomposition. Especially, natural graphite is preferred since it has a large intensity ratio ABC(101)/AB(101) value, and more preferred is a high purity material obtained by further purifying the highly crystalline graphite carbonaceous material.

Among the graphite carbonaceous materials (A), synthetic graphite is preferably obtained by subjecting to graphitization at a calcination temperature of 2,500°C to 3,200°C at least one organic material selected from coal tar pitch, coal heavy oils, normal pressure residual oils, petroleum heavy oils, aromatic hydrocarbons, nitrogen-containing cyclic compounds, sulfur-containing cyclic compounds, polyphenylene, polyvinyl chloride, polyvinyl alcohol, polyacrylonitrile, polyvinyl butyral, natural polymers, polyphenylene sulfide, polyphenylene oxide, furfuryl alcohol resins, phenol-formaldehyde resins, and imide resins, and pulverizing the resultant graphitized product by an appropriate pulverizing means.

As the carbonaceous material (B), a carbonaceous material having a $d_{002}$ value of 0.337 nm or more, preferably 0.337 nm to less than 0.380 nm, more preferably 0.340 nm to less than 0.360 nm, especially preferably 0.340 nm to less than 0.350 nm is used. The $d_{002}$ value is an index of crystallinity, and the above-mentioned graphite carbonaceous material (A) has a $d_{002}$ value of less than 0.337 nm, and thus, the carbonaceous material (B) is inferior in crystallinity to that of the graphite carbonaceous material (A).

The carbonaceous material (B) preferably has an intensity ratio ABC(101)/AB(101) of 0.01 or more, more preferably 0.15 or more, especially preferably 0.18 or more, as measured by powder XRD.

As the carbonaceous material (B), there can be used soil-form graphite, flake graphite, pulverized materials of these graphites, and highly crystalline graphite, each having a $d_{002}$ value of, for example, 0.337 nm or more.
These can be used individually or in combination. In this case, the carbonaceous material (B) is used in the form of pulverized powder preferably having an average particle diameter d50 of 5 μm or less, more preferably 1 μm or less, especially preferably 0.5 μm or less, as measured by a laser diffraction method.

The graphite carbonaceous material (A) can be subjected to mechanical treatment to obtain both the graphite carbonaceous material (A) and the carbonaceous material (B) simultaneously, thus forming an anode material. Examples of machines used for the mechanical treatment may include a ball mill, a planetary mill, a disc mill, an impeller mill, a jet mill, a sample mill, an atomizer, a pulverizer, a pin mill, a turbo-mill, a jaw crusher, and a hybridizer. Alternatively, graphite carbonaceous material (A) and carbonaceous material (B) may be separately obtained, and then, at least part of the surface of graphite carbonaceous material (A) may be coated with carbonaceous material (B) by means for surface modification to form an anode material. Examples of the means for surface modification include a jet mill, a counter jet mill, a micros, a fine mill, a molder grinder, a planetary mill, a sheeter composer, and a mechano micros.

An appropriate binder for powder may be used to bind the graphite carbonaceous material (A) and the carbonaceous material (B).

Further, as the carbonaceous material (B), there can be used a calcined material having a $d_{002}$ value of 0.337 nm or more obtained by subjecting to calcination an organic material which is capable of storing and releasing lithium ions after calcination. Specific examples of these organic materials include carbonizable organic materials, e.g., coal heavy oils, such as coal tar pitch including from soft pitch to hard pitch which undergo carbonization in a liquid phase, and carbonization liquefied oils; straight-run heavy oils, such as normal pressure residual oils and reduced pressure residual oils; petroleum heavy oils, such as cracked heavy oils including ethylene tar by-produced in the thermal cracking of crude oil or naphtha; and solidified materials obtained by subjecting the above-mentioned organic materials to distillation at a temperature not higher than the temperature at which the carbonization proceeds, or extraction with a solvent. Further examples include aromatic hydrocarbons, such as acenaphthylene, decacyclene, anthracene, etc.; nitrogen-containing cyclic compounds, such as phenazine, acridine, etc.; sulfur-containing cyclic compounds, such as thiophene, etc.; and alicyclic hydrocarbon compounds, such as adamantane, etc. although they require pressurizing at 30 MPa or higher. Examples of carbonizable thermoplastic polymers include polyphenylene, such as biphenyl and terphenyl which undergo a liquid phase in the course of carbonization; polyvinyl chloride; polyvinyl esters, such as polyvinyl acetate and polyvinyl butyral; and polyvinyl alcohol. To the above-mentioned organic materials and polymer compounds may be added an appropriate amount of an acid, such as phosphoric acid, boric acid, hydrochloric acid, etc., or an alkali, such as sodium hydroxide, etc. Further, these may be subjected to crosslinking treatment to an appropriate degree with an element selected from oxygen, sulfur, nitrogen, and boron at 300 to 600°C, preferably at 300 to 400°C. These organic materials can be mixed with the graphite carbonaceous material (A) in the form of powder and calcined to form anode materials. In these anode materials, the graphite carbonaceous material (A) has at least a part of a surface thereof coated with the carbonaceous material (B). The calcination temperature is 500 to 2,200°C, preferably 650 to 1,500°C, more preferably 700 to 1,200°C. From the viewpoint of conductivity, it is preferred that the calcination temperature falls in the above range.

In the anode material, the weight ratio between the graphite carbonaceous material (A) and the carbonaceous material (B) is 99.5:0.5 to 50:50, preferably 98:2 to 75:25, more preferably 97:3 to 80:20. When the carbonaceous material (B) is obtained by subjecting an organic material to calcination, the above weight ratio is determined in terms of the weight after the calcination. When the weight ratio between the graphite carbonaceous material (A) and the carbonaceous material (B) falls in the above range, there can be obtained a battery whose current efficiency and a negative electrode capacity are both in a preferred range.

In the present invention, it is preferred that the anode material comprising the graphite carbonaceous material (A) and the carbonaceous material (B) is subjected to disintegration or grinding so that the particle diameter becomes 4 to 40 μm, preferably 10 to 32 μm, further preferably 15 to 30 μm.

In the present invention, the anode material comprising the graphite carbonaceous material (A) and the carbonaceous material (B) preferably has an R value determined by IB/IA of more than 0.2 and 1.5 or less, more preferably 0.35 to 1.1, especially preferably 0.4 to 0.9, wherein IA and IB are the above-described peak intensities as measured by Raman spectroscopy using an argon ion laser at a wavelength of 514.5 nm. In addition, the anode material preferably has an intensity ratio represented by ABC(101)/AB(101) of 0.15 or more, more preferably 0.18 or more, as measured by XRD. Further, the anode material preferably has a surface area of 0.5 to 25 $m^2/g$, more preferably 2 to 20 $m^2/g$, as measured by a BET method.

Into these carbonaceous materials can be mixed other anode materials capable of storing and releasing lithium. Examples of such anode materials may include one or more metals selected from metals, such as Ag, Zn, Al, Ga, In, Si, Ge, Sn, Pb, P, Sb, Bi, Cu, Ni, Sr, Ba, etc.; oxides, sulfides, nitrides and silicades of these metals; and alloys of metals inert to Li, e.g., Ni, Cu, Fe, etc., and compounds of these metals and Li. These anode materials can be used individually or in combination.

<Method for producing a negative electrode>

Explanation is made below on the method for producing a negative electrode using the above-described anode materials.

With respect to the method for producing an electrode in the present invention, there is no particular limitation as long as the resultant electrode contains the above-described anode material as a component of a negative electrode, and conventionally known methods can be used. For example, a binder, a solvent and the like may be added to the above-described anode material to prepare a slurry, and the prepared slurry can be applied to a substrate of a current collector made of a metal, such as copper foil, nickel, or stainless steel, and dried to form a sheet electrode. Alternatively, the anode material itself can be shaped into, for example, a form of pellet electrode by a roll molding or press molding method.

Examples of binders usable for the above purpose include polymers stable to solvents, e.g., resin polymers,

such as polyethylene, polypropylene, polyethylene terephthalate, aromatic polyamide, cellulose, etc.; rubber polymers, such as styrene-butadiene rubbers, isoprene rubbers, butadiene rubbers, ethylene-propylene rubbers, etc.; thermoplastic elastomer polymers, such as styrene-butadiene-styrene block copolymers and hydrogenated products thereof, styrene-ethylene-butadiene-styrene copolymers, styrene-isoprene-styrene block copolymers and hydrogenated products thereof, etc.; soft resin polymers, such as syndiotactic 1,2-polybutadiene, ethylene-vinyl acetate copolymers, propylene-$\alpha$-olefin (having 2 to 12 carbon atoms) copolymers, etc.; fluorine polymers, such as polyvinylidene fluoride, polytetrafluoroethylene, polytetrafluoroethylene-ethylene copolymers, etc.; and polymer compositions having an ionic conduction property of alkali metal ions, especially lithium ions.

As a state in which the anode material in the present invention and the above-mentioned binder are mixed with each other, various states can be considered.

Specifically, there can be mentioned a state in which both of the anode material and the binder in a particle form are mixed with each other, a state in which the binder in a fiber form is entangled with particles of the anode material, and a state in which a layer of the binders is attached onto the particle surface of the anode material. The amount of the binder mixed with the anode material is preferably 0.1 to 30% by weight, more preferably 0.5 to 10% by weight, based on the weight of the anode material. When the amount of the binder added is larger than the above upper limit, the internal resistance of the resultant electrode is disadvantageously increased, and, when the amount is lower than the above lower limit, binding between the current collector and the powder of the anode material is poor.

Further, in the production of a negative electrode, an appropriate conductive material may be added. Examples of such materials include carbon black, such as acetylene black, furnace black, and ketjen black, and metal powder of nickel or copper having an average particle diameter of 1 $\mu$m or less.

<Positive electrode>

In the positive electrode constituting a battery, there is no particular limitation with respect to the cathode material, but it is preferred that the cathode material comprises a metal chalcogen compound which is capable of storing and releasing alkali metal cations, such as lithium ions, during charging and discharging. Examples of such metal chalcogen compounds include oxides of vanadium, sulfides of vanadium, oxides of molybdenum, sulfides of molybdenum, oxides of manganese, oxides of chromium, oxides of titanium, sulfides of titanium, and complex oxides and complex sulfides of these. Preferred examples may include $Cr_3O_8$, $V_2O_5$, $V_5O_{13}$, $VO_2$, $Cr_2O_5$, $MnO_2$, $TiO_2$, $MoV_2O_8$, $TiS_2$, $V_2S_5$, $MoS_2$, $MoS_3VS_2$, $Cr_{0.25}V_{0.75}S_2$, , $Cr_{0.5}V_{0.5}S_2$, etc. Further, there can be used $LiMY_2$ (M represents a transition metal, such as Co, Ni, etc. and Y represents a chalcogen compound of O, S, etc.); oxides, such as $LiM_2Y_4$ (M is Mn, and Y is O), $WO_3$, etc.; sulfides, such as CuS, $Fe_{0.25}V_{0.75}S_2$, $Na_{o\cdot i}CrS_2$, etc.; phosphorus sulfur compounds, such as $NiPS_3$, $FePS_3$, etc.; and selenium compounds, such as $VSe_2$, $NbSe_3$, etc.

With respect to the form of the positive electrode, there is no particular limitation. For example, if desired, a binder, a thickener, a conductive material, a solvent, etc. can be added to the cathode material and mixed together, and then, the mixture can be applied onto a substrate of a current collector and dried to form a sheet electrode or press-molded to give a pellet electrode. As materials for the current collector for the positive electrode, metals, such as aluminum, titanium, tantalum, etc., and alloys of these metals are used. Among these, aluminum and alloys thereof are especially preferred from the viewpoint of achieving high energy density due to their light-weight.

<Assembly of secondary battery>

The thus produced negative electrode plate and the positive electrode plate and the above-described non-aqueous electrolyte are combined with other battery constituents, namely, a separator, a gasket, a current collector, a sealing plate, a cell casing, etc. to form a secondary battery. With respect to the form of the battery, there is no particular limitation, and, for example, the battery can be in a cylindrical form, a rectangular form, a coin form, etc. Basically, a current collector and an anode material are placed on a bottom plate of a cell, and an electrolyte and a separator are added thereto, and a positive electrode is placed so that the positive and negative electrodes face to each other, and caulked together with a gasket and a sealing plate to form a secondary battery. A battery in a cylindrical form can be produced by spirally rolling the above-mentioned negative electrode and positive electrode prepared as sheet electrodes, together with a porous separator made of, e.g., polyolefin, injecting the non-aqueous electrolyte of the present invention, and by sealing the battery. A battery in a coin form can be produced by stacking on one another the above-mentioned negative electrode and positive electrode prepared as pellet electrodes and a separator.

As the separator constituting the battery, a porous sheet, nonwoven fabric, or a porous film, made of a material generally having an excellent liquid-retaining property, for example, a polyolefin resin, such as polyethylene or polypropylene, is used, and impregnated with the above electrolyte.

Examples

Hereinbelow, the present invention will be described in more detail with reference to the following Examples of non-aqueous electrolytes prepared according to the present invention and secondary batteries using the same. The following Examples should not be construed as limiting the scope of the present invention.
Here, properties of the non-aqueous electrolytes were evaluated in accordance with the following methods.

(1) Self-extinguishing property of electrolyte:

A strip-form glass fiber filter paper having a width of 15 mm, a length of 300 mm, and a thickness of 0.19 mm was immersed in an electrolyte held in a beaker for 10 minutes or longer so that the glass fiber filter paper was well impregnated with the electrolyte. Then, the excess electrolyte soaking the glass fiber filter paper was dripped off at the edge of the beaker for a while, and the glass fiber filter paper was then vertically held with a clip at its end. The glass fiber filter paper was heated from its lower end with a small gas flame by means of a lighter for about three seconds, and then it was examined whether it exhibited a self-extinguishing property in a state that the fire source was removed from the filter paper, and, in case the filter paper caught fire, the time until it was put out was measured.

(2) Flash point of electrolyte:

A flash point of a non-aqueous electrolyte was measured in accordance with JIS K-2265.

(3) Electrical conductivity of electrolyte:

Using a conductivity meter CM-305, manufactured by Toa Electrics Ltd., and a conductivity cell CG-511B, a conductivity at 25°C was measured.
In addition, properties of the secondary batteries and properties of the electrode materials were evaluated with respect to various battery forms and battery materials (active materials for negative and positive electrodes). The methods for evaluations were described below in the following Examples.

<Non-aqueous electrolyte 1 (Examples 1 to 8)>

In non-aqueous mixed solvents comprising a chain state phosphate (a1), a cyclic phosphate (a2), and a cyclic carboxylate (b1) and having a predetermined volume ratio of the chain state phosphate (a1) and the cyclic carboxylate (b1) and containing a predetermined amount of the cyclic phosphate (a2) shown in Table 1 below, was individually dissolved a lithium salt as a solute to prepare non-aqueous electrolytes 1 in Examples 1 to 8 having a solute concentration of 1 mol/$dm^3$. On the other hand, the non-aqueous electrolytes in Comparative Examples 1 to 3 are non-aqueous electrolytes which do not contain the cyclic carboxylate (b1) and/or the cyclic phosphate (a2). Next, with respect to each of these electrolytes, a self-extinguishing property (flame retardancy) and a conductivity were measured.
Further, using the electrolytes shown in Table 1 below, synthetic graphite as an anode active material, and $LiCoO_2$ as a cathode active material, cylindrical-form battery elements were produced, and a charge-discharge capacity and thermal stability of the battery were measured. The results were shown in Table 1 below. In addition, with respect to the cylindrical-form batteryelement produced using non-aqueous electrolyte 1 in Example 1, the results of measurement of the charge-discharge curve in the first cycle, and the results of measurement of the thermal stability (exothermic temperature) and the results of measurement of the thermal stability (change in pressure) of the charged battery element were shown in Fig. 1, Fig. 2, and Fig. 3, respectively.
Here, the charge-discharge characteristics of a battery and the thermal stability (thermal decomposition rate) of a battery were evaluated by the following methods.
An element for evaluation was produced as follows.
A carbonaceous material (natural graphite) as an anode active material and a fluororesin as a binder were mixed together in a 90:10 weight ratio, and the resultant mixture was dispersed in a solvent (N-methylpyrrolidone) to prepare a slurry. Then, the prepared slurry was applied to both surfaces of a copper foil as a current collector, and dried to obtain a negative electrode sheet. The obtained negative electrode sheet was cut out into a piece having a width of 20 mm and a length of 150 mm to form a negative electrode. Separately, lithium cobalt oxide ($LiCoO_2$) as a cathode active material, acetylene black as an electrically conductive material, and a fluororesin as a binder were mixed together in a 90:5:5 weight ratio, and the resultant mixture was dispersed in N-methylpyrrolidone to prepare a slurry. Then, the prepared slurry was applied to both surfaces of an aluminum foil as a current collector for positive electrode, and dried to obtain a positive electrode sheet. The obtained positive electrode sheet was cut out into a piece having a width of 20 mm and a length of 150 mm to form a positive electrode. The thus formed negative electrode and

positive electrode were individually connected to electrode terminals, and they were spirally rolled, intermediated by a separator made of a porous polypropylene film having a width of 25 mm and a length of 200 mm to produce a battery element for evaluation of battery charge-discharge characteristics. The battery element was accommodated in a closed cell having electrode terminals in a dried argon atmosphere, and a non-aqueous electrolyte was injected thereinto, and then the gas tightness of the battery was kept.

Charging was conducted by a constant current and constant voltage charging method at 4.2 V at 50 mA, and the charging was completed after a lapse of 8 hours. On the other hand, discharging was conducted at a constant current of 10 mA, and the discharging was completed at a point in time when the voltage reached 2.5 V. A battery discharge capacity was measured in this charge-discharge cycle with respect to the battery element.

Further, the thermal stability (thermal decomposition rate) of a battery was evaluated as follows. The above-produced battery sample for evaluation was accommodated in a closed cell having electrode terminals in a dried argon atmosphere, and a non-aqueous electrolyte was injected thereinto, and then the gas tightness of the battery was kept. Charging and discharging were conducted under the above conditions, and, after repeating this charge-discharge cycle two times, the resultant battery sample was charged so that the final voltage became 4.2 V to produce a battery element in a charged state. Then, the charged battery element produced was accommodated in a predetermined high-pressure closed cell (resistant to pressure of 105 x $10^5$ Pa) in a dried argon atmosphere, and, using a high-temperature high-pressure calorimeter (Radex-solo, manufactured by SYSTAG), an exothermic rate and a pressure elevation rate during the thermal decomposition in the battery when elevating a temperature in the range of from 25 to 300°C at a temperature elevation rate of 1°C per minute were measured to determine the thermal stability (thermal decomposition rate) of the battery.

## Table 1

| | | Electrolyte | | | Cyclic phospate | | Conductivity (mS/cm) | Self-extinguishing property (sec) | Discharge capacity (mAh) | Exothermic ratio °C / min | Pressure elevating ratio x$10^5$ Pa /min |
|---|---|---|---|---|---|---|---|---|---|---|---|
| | | Solute | Solvent | Volume ratio | Kind | Amount formulated | | | | | |
| Example | 1 | $LIPF_6$ | GBL+EDMP | 80:20 | EEP | 5 | 10.6 | within 1 sec | 55 | 0.5 | 0.6 |
| | 2 | $LIPF_6$ | GBL+TMP | 80:20 | EEP | 5 | 11.5 | within 1 sec | 51 | 0.7 | 1.1 |
| | 3 | $LIPF_6$ | GBL+DEMP | 70:30 | EEP | 5 | 9.9 | within 1 sec | 58 | 0. 6 | 0.5 |
| | 4 | $LIPF_6$ | GBL+PDMP | 70:30 | EEP | 10 | 9.6 | within 1 sec | 54 | 1. 0 | 0.8 |
| | 5 | $LiPF_6$ | GBL+BDMP | 70:30 | EEP | 10 | 8.3 | within 1 sec | 52 | 0.9 | 0.8 |
| | 6 | $LIBF_4$ | GBL+EDMP | 60:40 | MEP | 5 | 7.2 | within 1 sec | 54 | 0.2 | 0.3 |
| | 7 | $LiBF_4$ | GVL+DEMP | 70:30 | MEP | 5 | 5.1 | within 1 sec | 50 | 0.6 | 0.8 |
| | 8 | $LiBF_4$ | ECL+DEMP | 70:30 | MEP | 5 | 4.6 | within 1 sec | 49 | 0.8 | 0.6 |
| Comparative Example | 1 | $LiPF_6$ | EC+DEC | 50:50 | None | - | 8.3 | None | 60 | 162 | 165 |
| | 2 | $LiPF_6$ | EC+DEC+TMP | 60:20:20 | None | - | 8.9 | within 1 sec | 0 | - | - |
| | 3 | $LiPF_6$ | EC+DEC+TMP | 60:20:20 | EEP | 5 | 8.7 | within 1 sec | 40 | 21.3 | 16.7 |

Meanings of abbreviations used in Table 1 are as follows.

| | |
|---|---|
| TMP: | trimethyl phosphate |
| EDMP: | dimethylethyl phosphate |
| PDMP: | dimethylpropyl phosphate |
| BDMP: | dimethylbutyl phosphate |
| DEMP: | diethylmethyl phosphate |
| EEP: | ethylethylene phosphate |
| MEP: | methylethylene phosphate |
| GBL: | γ-butyrolactone |
| GVL: | γ-valerolactone |
| ECL: | ε-caprolactone |
| EC: | ethylene carbonate |
| DEC: | diethyl carbonate |

[Non-aqueous electrolyte 2 (Examples 9 to 19)]

In non-aqueous mixed solvents comprising a chain state phosphate (a1) and a cyclic carboxylate (b1) and having a predetermined volume ratio shown in Table 2 below, were individually dissolved a predetermined amount of a vinylene carbonate compound (c1) or a vinylethylene carbonate compound (c2) and a lithium salt as a solute to prepare non-aqueous electrolytes 2 in Examples 9 to 19 having a solute concentration of 1 mol/$dm^3$. On the other hand, the non-aqueous electrolytes in Comparative Examples 4 to 6 are non-aqueous electrolytes which do not contain cyclic carboxylate (b1) and/or vinylene carbonate compound (c1) or vinylethylene carbonate compound (c2). Next, with respect to each of these electrolytes, a self-extinguishing property (flame retardancy) and a conductivity were measured.

Further, using the electrolytes shown in Table 2 below, synthetic graphite as an anode active material, and $LiCoO_2$ as a cathode active material, cylindrical-form battery elements were produced in the same manner as in the above non-aqueous electrolyte 1, and a charge-discharge capacity and thermal stability of the battery were measured. The results were shown in Table 2. In addition, with respect to the cylindrical-form battery sample produced using non-aqueous electrolyte 2 in Example 9, the results of measurement of the charge-discharge curve in the first cycle, and the results of measurement of the thermal stability (exothermic temperature) and the results of measurement of the thermal stability (change in pressure) of the charged battery element were shown in Fig. 4, Fig. 5, and Fig. 6, respectively.

Table 2

| | | Electrolyte | | | Additive | | Conductivity (mS/cm) | Self-extinguishing property (sec) | Discharge capacity (mAh) | Exothermic ratio °C / min | Pressure elevating ratio x$10^5$ Pa /min |
|---|---|---|---|---|---|---|---|---|---|---|---|
| | | Solute | Solvent | Volume ratio | Kind | Amount formulated | | | | | |
| Example | 9 | $LiPF_6$ | GBL+EDMP | 80:20 | VC | 2 | 11.5 | within 1 sec | 61 | 0.8 | 1.0 |
| | 10 | $LiBF_4$ | GBL+EDMP | 70:30 | VC | 5 | 7.2 | within 1 sec | 58 | 1.0 | 0.8 |
| | 11 | $LiBF_4$ | GBL+EDMP | 60:40 | VC | 10 | 7.1 | within 1 sec | 55 | 1.0 | 1.1 |
| | 12 | $LiBF_4$ | GBL+EDMP | 50:50 | VC | 10 | 7.0 | within 1 sec | 56 | 0.8 | 0.9 |
| | 13 | $LiBF_4$ | GBL+TMP | 70:30 | VEC | 10 | 7.6 | within 1 sec | 54 | 0.9 | 0.8 |
| | 14 | $LiBF_4$ | GBL+TEP | 50:50 | VEC | 10 | 7.0 | within 1 sec | 71 | 0.3 | 1.7 |
| | 15 | $LiBF_4$ | GBL+TEP | 10:90 | VEC | 10 | 6.5 | within 1 sec | 59 | 1.1 | 0.6 |
| | 16 | $LiBF_4$ | GBL+DEMP | 60:40 | VC | 5 | 7.1 | within 1 sec | 56 | 0.7 | 0.7 |
| | 17 | LiBETI | GBL+EDMP | 70:30 | VC | 5 | 7.2 | within 1 sec | 58 | 1.1 | 0.7 |
| | 18 | $LiBF_4$ | GVL+EDMP | 70:30 | VC | 5 | 5.2 | within 1 sec | 54 | 1.2 | 1.1 |
| | 19 | $LiPF_6$ | ECL+EDMP | 70:30 | VC | 5 | 4.8 | within 1 sec | 52 | 1.0 | 0.9 |
| Comparative Example | 4 | $LiPF_6$ | EC+DEC | 50:50 | None | - | 8.3 | None | 60 | 162 | 165 |
| | 5 | $LiPF_6$ | EC+DEC+TMP | 60:20:20 | None | - | 8.9 | within 1 sec | 0 | - | - |
| | 6 | $LiPF_6$ | EC+DEC+TMP | 60:20:20 | VC | 5 | 8.8 | within 1 sec | 43 | 16.6 | 14.6 |

Meanings of abbreviations used in Table 2 are as follows.

| | |
|---|---|
| TMP: | trimethyl phosphate |
| TEP: | triethyl phosphate |
| EDMP: | dimethylethyl phosphate |
| DEMP: | diethylmethyl phosphate |
| GBL: | γ-butyrolactone |
| GVL: | γ-valerolactone |
| ECL: | ε-caprolactone |
| VC: | vinylene carbonate |
| VEC: | 4-vinylethylene carbonate |
| EC: | ethylene carbonate |
| DEC: | diethyl carbonate |
| LiBETI: | $LiN(SO_2C_2F_5)_2$ |

[Non-aqueous electrolyte 3 (Examples 20 to 28)]

In non-aqueous solvents comprising a chain state phosphate (a1) and a cyclic carboxylate (b1) and having a predetermined volume ratio between the chain state phosphate (a1) and the cyclic carboxylate (b1) shown in Table 3 below, were individually dissolved a predetermined amount of a vinylene carbonate compound (c1) and/or a vinylethylene carbonate compound (c2), predetermined amounts of a cyclic amide compound (d1), a cyclic carbamate compound (d2), and a heterocyclic compound (d3), and a lithium salt as a solute were dissolved individually to prepare non-aqueous electrolytes 3 in Examples 20 to 28 having a solute concentration of 1 mol/$dm^3$. On the other hand, the non-aqueous electrolytes in Comparative Examples 7 to 10 are non-aqueous electrolytes which do not contain the vinylene carbonate compound (c1) or the vinylethylene carbonate compound (c2), or any one of the cyclic amide compound (d1), the cyclic carbamate compound (d2) and the heterocyclic compound (d3). Next, with respect to each of these electrolytes, a self-extinguishing property (flame retardancy) and a conductivity were measured. The results are shown in Table 4 below.

Table 3

| | | Electrolyte | | | Additive | | | |
|---|---|---|---|---|---|---|---|---|
| | | Solute | Solvent | Volume ratio | Kind | Amount formulated (wt%) | Kind | Amount formulated (wt%) |
| Examples | 20 | $LiBF_4$ | TMP+GBL | 20:80 | VC | 5 | NMP | 5 |
| | 21 | $LiBF_4$ | TMP+GBL | 30:70 | VEC | 10 | NMP | 5 |
| | 22 | $LiBF_4$ | TMP+GBL | 50:50 | VEC | 10 | NMO | 5 |
| | 23 | $LiBF_4$ | TMP+GBL | 80:20 | VEC | 10 | NMO | 5 |
| | 24 | $LiBF_4$ | TMP | 100 | VEC | 10 | NMP | 5 |
| | 25 | $LiBF_4$ | EDMP+GBL | 20:80 | VEC | 10 | NMS | 5 |
| | 26 | $LiBF_4$ | DEMP+GBL | 25:75 | VEC+VC | 8+2 | NVP | 5 |
| | 27 | $LiBF_4$ | DEMP+GBL | 40:60 | VEC+VC | 8+2 | NMC | 5 |
| | 28 | $LiPF_6$ | TFEDMP+GBL | 60:40 | VEC | 10 | NMM | 5 |
| Comparative Examples | 7 | $LiBF_4$ | EC+DEC | 30:70 | None | - | None | - |
| | 8 | $LiBF_4$ | TMP | 100 | None | - | None | - |
| | 9 | $LiPF_6$ | TMP+EC | 30:70 | VC | 5 | None | - |
| | 10 | $LiBF_4$ | TMP+GBL | 20:80 | None | - | None | - |

Meanings of abbreviations used in Table 3 are as follows.

TMP: trimethyl phosphate
EDMP: dimethylethyl phosphate
DEMP: diethylmethyl phosphate
TFEDMP: trifluoroethyldimethyl phosphate
GBL: γ-butyrolactone
EC: ethylene carbonate
DEC: diethyl carbonate
VC: vinylene carbonate
VEC: 4-vinylethylene carbonate
NMP: 1-methyl-2-pyrrolidone
NVP: 1-vinyl-2-pyrrolidone
NMC: 1-methyl-2-caprolactam
NMO: 3-methyl-2-oxazolidone

NMS: N-methylsuccinimide
NMM: N-methylmaleimide

Next, using the non-aqueous electrolytes in Examples 20 to 28 and Comparative Examples 7 to 10, coin-form secondary batteries were produced as follows. A negative electrode for battery was formed as follows. Natural graphite as an anode material and a fluororesin as a binder were mixed together in a 90:10 weight ratio, and the resultant mixture was dispersed in a solvent (N-methylpyrrolidone) to prepare a slurry. Then, the prepared slurry was applied to a copper foil as a current collector, and dried to obtain a negative electrode sheet. The obtained negative electrode sheet was punched out into a piece having a diameter of 12.5 mm to form a negative electrode. Separately, a positive

electrode was formed as follows. Lithium nickel cobalt oxide ($LiNi_{0.8}Co_{0.2}O_2$) as a cathode active material, acetylene black as an electrically conductive material, and a fluororesin as a binder were mixed together in a 90:5:5 weight ratio, and the resultant mixture was dispersed in N-methylpyrrolidone to prepare a slurry. Then, the prepared slurry was applied to an aluminum foil as a current collector, and dried to obtain a positive electrode sheet. The obtained positive electrode sheet was die-cut into a piece having a diameter of 12.5 mm to form a positive electrode.

A battery was produced as follows. The above-formed positive electrode and negative electrode were accommodated in a stainless steel casing, which served also as a positive electrode terminal, intermediated by a separator made of a porous polypropylene film and impregnated with each of the non-aqueous electrolytes obtained in Examples 20 to 28 and Comparative Examples 7 to 10. Then, the casing was sealed with a stainless steel sealing plate, which served as a negative electrode terminal, through a gasket made of polypropylene to produce a coin-form battery, and charge-discharge characteristics were measured. The results are shown in Table 4 below. In addition, with respect to the batteries produced using the non-aqueous electrolytes in Examples 20 and 27 and Comparative Example 9, the results of measurement of the cycle characteristics of charge-discharge capacity retaining ratio are shown in Fig. 7.

Using the coin-form battery produced, the charge-discharge efficiency of a battery was measured as follows. Charging was conducted by a constant current and constant voltage charging method at 4.2 V at 1.4 mA, and the charging was completed after a lapse of 3 hours. Then, discharging was conducted at a constant current of 1.4 mA, and the discharging was completed at a point in time when the voltage reached 2.7 V. Initial (in the first cycle and third cycle) discharge capacities and a charge-discharge efficiency of each battery were measured in the above charge-discharge cycle. The charge-discharge efficiency was determined from the following formula.

$$\text{Charge-discharge efficiency (\%)} = \{(\text{Discharge capacity})/(\text{Charge capacity})\} \times 100$$

In addition, the cycle characteristics of discharge capacity retaining ratio were obtained by further repeating the above charge-discharge cycle. The discharge capacity retaining ratio was determined from the following formula.

$$\text{Discharge capacity retaining ratio (\%)} = \{(\text{Discharge capacity in the n-th cycle})/(\text{Charge capacity in the First cycle})\} \times 100$$

(wherein n represents the number of cycles)

Table 4

| | | Self - extinguishing property (sec) | Conductivity (mS/cm) | First-cycle charge-discharge characteristics | | Third-cycle charge-discharge characteristics | |
|---|---|---|---|---|---|---|---|
| | | | | discharge capacity (Ah/kg) | charge-discharge efficiency (%) | discharge capacity (Ah/kg) | charge-discharge efficiency (%) |
| | 20 | within 1 sec | 7.8 | 159 | 76.0 | 161 | 99.3 |
| | 21 | within 1 sec | 8.2 | 156 | 75.1 | 152 | 97.2 |
| | 22 | within 1 sec | 8.5 | 151 | 72.6 | 145 | 97.2 |
| | 23 | within 1 sec | 7.1 | 155 | 72.7 | 152 | 97.4 |
| | 24 | within 1 sec | 4.8 | 150 | 71.3 | 140 | 95.7 |
| | 25 | within 1 sec | 7.0 | 162 | 76.7 | 160 | 98.3 |
| | 26 | within 1 sec | 6.8 | 156 | 74.4 | 157 | 99.2 |
| | 27 | within 1 sec | 7.0 | 150 | 71.8 | 148 | 98.4 |
| | 28 | within 1 sec | 7.3 | 145 | 69.7 | 144 | 98.1 |
| | 7 | None | 8.4 | 151 | 71.6 | 150 | 99.2 |
| | 8 | within 1 sec | 5.0 | 0 | 0 | 0 | 0 |
| | 9 | within 1 sec | 8.7 | 56 | 27.9 | 36 | 61.8 |
| | 10 | within 1 sec | 10.3 | 28 | 14.0 | 11 | 56.3 |

As can be seen from Table 4 and Fig. 7, non-aqueous electrolyte 3 of the present invention has excellent flame retardancy and conductivity, and further excellent charge-discharge characteristics and cycle characteristics can be achieved.

[Non-aqueous electrolyte 4 (Examples 29 to 36)]

In non-aqueous solvents using a chain state phosphate (a1) and a cyclic carboxylate (b1) or a cyclic carbonate (b2) and having a predetermined volume ratio shown in Table 5 below, predetermined amounts of a vinylene carbonate compound (c1) and a vinylethylene carbonate compound (c2), and a lithium salt as a solute were dissolved individually to prepare non-aqueous electrolytes 4 in Examples 29 to 36 having a solute concentration of 1 mol/$dm^3$. On the other hand, the non-aqueous electrolytes in Comparative Examples 11 to 14 are non-aqueous electrolytes which do not contain any one of, or neither of the vinylene carbonate compound (c1) and the vinylethylene carbonate compound (c2). Next, with respect to each of these electrolytes, a flash point and a conductivity were measured. The results are shown in Table 6 below.

## Table 5

| | | Electrolyte | | | Additive | | | |
|---|---|---|---|---|---|---|---|---|
| | | Solute | Solvent | Volume ratio | Kind | Amount formulated (wt%) | Kind | Amount formulated (wt%) |
| Examples | 29 | $LiPF_6$ | TMP | 100 | VC | 5 | VEC | 5 |
| | 30 | $LiPF_6$ | TMP | 100 | VC | 2 | VEC | 8 |
| | 31 | $LiPF_6$ | TMP+PC | 90:10 | VC | 5 | VEC | 5 |
| | 32 | $LiPF_6$ | TMP+PC | 80:20 | VC | 5 | VEC | 5 |
| | 33 | $LiPF_6$ | TMP+PC | 60:40 | VC | 5 | VEC | 5 |
| | 34 | $LiPF_6$ | TMP+GBL | 80:20 | VC | 5 | VEC | 5 |
| | 35 | $LiPF_6$ | TMP+EC | 80:20 | VC | 2 | VEC | 8 |
| | 36 | $LiPF_6$ | TFEDMP+GBL | 80:20 | VC | 2 | VEC | 8 |
| Comparative Examples | 11 | $LiPF_6$ | TMP | 100 | None | - | None | - |
| | 12 | $LiPF_6$ | TMP | 100 | VC | 5 | None | - |
| | 13 | $LiPF_6$ | TMP+PC | 20:80 | None | - | None | - |
| | 14 | $LiPF_6$ | TMP+PC | 20:80 | VC | 5 | None | - |

Meanings of abbreviations used in Table 5 are as follows.

TMP: trimethyl phosphate
TFEDMP: trifluoroethyldimethyl phosphate
GBL: γ-butyrolactone
EC: ethylene carbonate
PC: propylene carbonate
VC: vinylene carbonate
VEC: 4-vinylethylene carbonate

Then, using the non-aqueous electrolytes in Examples 29 to 36 and Comparative Examples 11 to 14, coin-form secondary batteries were produced. With respect to each of the secondary batteries produced, charge-discharge characteristics were measured. The results are shown in Table 6. The method for producing a secondary battery, and the methods for evaluation of charge-discharge capacity and charge-discharge efficiency were the same as those for the secondary batteries produced using the non-aqueous electrolytes 3.

Table 6

| | Flash point (°C) | Conductivity (mS/cm) | First-cycle charge-discharge characteristics | | Third cycle charge-discharge characteristics | |
|---|---|---|---|---|---|---|
| | | | discharge capacity (Ah/kg) | charge-discharge efficiency (%) | discharge capacity (Ah/kg) | charge-discharge efficiency (%) |
| 29 | None | 4.9 | 145 | 70.1 | 138 | 96.2 |
| 30 | None | 5.0 | 149 | 71.0 | 144 | 97.8 |
| 31 | None | 5.9 | 140 | 65.9 | 127 | 95.1 |
| 32 | None | 6.5 | 142 | 67.2 | 129 | 95.1 |
| 33 | None | 7.4 | 140 | 67.0 | 130 | 95.6 |
| 34 | None | 6.7 | 145 | 69.7 | 144 | 98.1 |
| 35 | None | 6.6 | 145 | 68.9 | 143 | 97.7 |
| 36 | None | 5.9 | 144 | 64.6 | 134 | 96.4 |
| 11 | None | 4.9 | 0 | 0 | 0 | 0 |
| 12 | None | 4.8 | 50 | 24.7 | 33 | 64.1 |
| 13 | 152 | 7.1 | 28 | 14.0 | 12 | 56.0 |
| 14 | 150 | 6.9 | 81 | 38.0 | 76 | 90.8 |

As can be seen from Table 6, the non-aqueous electrolytes in Comparative Examples 11 and 12 have no flash point, but they are disadvantageous in that a high discharge capacity cannot be obtained and the charge-discharge efficiency is low. Further, the non-aqueous electrolytes in Comparative Examples 13 and 14 are disadvantageous not only in that they have a flash point and hence have a problem in nonflammability, but also in that excellent charge-discharge characteristics cannot be obtained. In contrast, the electrolytes in Examples 29 to 36 are advantageous not only in that they have no flash point, but also in that excellent charge-discharge characteristics can be obtained.

[Anode material using graphite carbonaceous material (A) and carbonaceous material (B)]

(Evaluation of properties of electrode materials)

With respect to each electrode material, X-ray diffractometry, particle diameter, Raman spectroscopy, and plane spacing ($d_{002}$) were evaluated by the following methods.

(1) Wide-angle X-ray diffractometry

A sample plate having a thickness of 0.2 mm was filled with graphite powder so that the graphite powder was not oriented, and subjected to X-ray diffraction measurement by means of an X-ray diffractometer (JDX-3500), manufactured by JEOL LTD., using CuK$\alpha$ at an output of 30 kV and 200 mA. The background was subtracted individually from the resultant peaks ascribed to AB(101) and ABC(101), and then an intensity ratio ABC(101)/AB(101) was obtained by calculation.

(2) Particle diameter measurement

A particle diameter was measured by means of a laser diffraction-type particle diameter evaluation machine, HORIBA LA-920, using polyoxyethylene sorbitan laurate Tween 20 as a dispersion medium, and the automatically calculated median diameter d50 was used as a criterion for evaluation.

(3) Raman spectroscopy

Using JASCO Corporation NR-1800, an argon ion laser at a wavelength of 514.5 nm with an intensity of 30 mW was illuminated. Here, the intensity of a peak appearing in the range of from 1,570 to 1,620 $cm^{-1}$ and the intensity of a peak appearing in the range of from 1,350 to 1,370 $cm^{-1}$ were measured, and then an R value was obtained from these measurement values.

(4) Plane spacing: $d_{002}$

With respect to each of graphite carbonaceous material (A) and carbonaceous material (B), X-ray diffraction was measured in accordance with the method proposed by 117 Committee of Japan Society for the Promotion of Science, and further subjected to peak separation method, and then, from the peaks separated, a $d_{002}$ value was calculated.

(Electrochemical evaluation of electrode)

With respect to the electrode materials, electrochemical properties were measured by a charge-discharge test.

A negative electrode was prepared as follows. A dimethylacetamide solution of polyvinylidene fluoride (PVdF) was added to 2 g of an anode material sample powder so that the PVdF content became 7% by weight in terms of solids content, and stirred to obtain a slurry. The obtained slurry was applied to a copper foil and pre-dried at 80°C. Further, the copper foil and pre-dried slurry were together calendered, and then die-cut into a disk form having a diameter of 12.5 mm, and dried under a reduced pressure at 110°C to obtain an electrode.

The obtained electrode was faced to a lithium metal electrode through a separator made of polypropylene impregnated with an electrolyte to produce a coin-form cell, and it was subjected to charge-discharge test. Conditions for the test were such that charging was conducted at a current density of 0.5 $mA/cm^2$ until the potential between the electrodes became 10 mV, and then discharging was conducted at a current density of 0.5 $mA/cm^2$ until the potential between the electrodes became 2.0 V. The initial charge-discharge efficiency (%) and discharge capacity (mAh/g) were individually evaluated in terms of the respective average values of the results obtained from four coin-form cells. The first-cycle charge-discharge efficiency (eff.(%)) was evaluated from:

$$(\text{First-cycle discharge capacity})/(\text{First-cycle charge capacity}) \times 100\ (\%).$$

The resistance of an anode material to the electrolyte used can be presumed from the charge-discharge efficiency, and the initial discharge capacity can be presumed from the discharge capacity. Specifically, the above-mentioned anode material shaped in a pellet form together with a current collector using a binder, and a separator, an electrolyte, and a lithium metal as a counter electrode were combined to form a half battery, and assembled in a 2016

coin cell and evaluated by means of a charge-discharge tester. A similar effect can be expected when using a positive electrode as a counter electrode instead of lithium.

(Examples 37 to 39)

The non-aqueous electrolyte 2 or 4 of the present invention was used. Specifically, in non-aqueous solvents comprising a chain state phosphate (a1) and a cyclic carboxylate (b1) and/or a cyclic carbonate (b2) in a predetermined volume ratio shown in Table 7 below, a predetermined amount of a vinylene carbonate compound (c1) and/or a vinylethylene carbonate compound (c2) and a lithium salt as a solute were dissolved individually to prepare non-aqueous electrolytes in Examples 37 to 39 having a solute concentration of 1 mol/$dm^3$. On the other hand, the non-aqueous electrolytes in Comparative Examples 15 and 16 are non-aqueous electrolytes which do not fall in the scope of the present invention.

An anode material in Example 37 was prepared by the following method.

Graphite carbonaceous material (A) having an average particle diameter d50 of 25 μm as measured by a laser diffraction method and having an ABC/AB ratio of 0.25, and petroleum pitch (manufactured by Mitsubishi Chemical Corporation) were stirred and uniformly mixed in air at 70°C by means of a mixer. The resultant powder was subjected to heat treatment by keeping at 1,300°C in an inert atmosphere by means of a batch-wise heating oven. The resultant powder was cooled in an inert atmosphere, and pulverized so that the average particle diameter d50 was adjusted to be 23 μm to obtain a sample powder. A content of the carbonaceous material (B) calculated from the residual carbon rate was 8% by weight when the total weight of the powder was taken as 100% by weight. The ABC/AB ratio calculated from the X-ray diffraction measurement in accordance with the above-mentioned method was 0.17, and the R value calculated from the results of Raman spectroscopy was 0.40. With respect to the electrochemical evaluations of this anode material,the initial charge-discharge efficiency was 91% and the initial discharge capacity was 347 mAh/g.

Each of the anode materials in Examples 38 and 39 was treated in substantially the same manner as in Example 37, except that temperature in the heat treatment was changed from 1,300°C to 900°C, to obtain a sample powder having an average particle diameter d50 of 24 μm. A content of the carbonaceous material (B) calculated from the residual carbon rate was 7% by weight when the total weight of the powder was taken as 100% by weight.

On the other hand, the non-aqueous electrolytes in Comparative Examples 15 and 16 are non-aqueous electrolytes, which are obtained by adding the vinylethylene carbonate compound (c2) to the chain state phosphate (a1) as a non-aqueous solvent and dissolving therein a lithium salt, and which do not fall in the scope of the present invention. As the anode materials in Comparative Examples 15 and 16, graphite particles obtained by mechanically grinding graphite carbonaceous material (A) were used, which have d50 values of 17 μm and 15 μm, respectively, as measured by a laser diffraction method, ABC/AB ratios of 0.20 and 0, respectively, as calculated from the results of X-ray diffraction measurement, and R values of 0.15 and 0.18, respectively, as calculated from the results of Raman spectroscopy, and carbonaceous material (B) was not used.

The compositions of the electrolytes and the powder physical properties parameters of the anode materials are shown in Table 7, and the results of evaluations are shown in Table 8.

Table 7

| | | Electrolyte | | | | | Anode material | | | | | | |
|---|---|---|---|---|---|---|---|---|---|---|---|---|---|
| | | Solute | Solvent | Volume ratio | Additive | Blend amount (wt%) | Calcining temperature (°C) | Average particle diameter d5 (μm) | Carbonaceous material(B) content (part by weight) | Raman value ( - ) | ABC /AB ( - ) | Graphite material (A)d002 (Å) | Carbonaceous material (B)d002 (Å) |
| Examples | 37 | $LiBF_4$ | TMP+GBL | 80:20 | VEC | 5 | 1300 | 23 | 8 | 0.40 | 0.17 | 3.35 | 3.45 |
| | 38 | $LiBF_6$ | TMP+PC | 80:20 | VEC+VC | 5+2 | 900 | 24 | 7 | 0.52 | 0.19 | 3.35 | 3.46 |
| | 39 | $LiPF_5$ | TMP+GBL+EC | 60:20:20 | VEC+VC | 5+2 | 900 | 24 | 7 | 0.52 | 0.19 | 3.35 | 3.46 |
| Comparative Examples | 15 | $LiBF_4$ | TMP | 100 | VEC | 5 | - | 17 | 0 | 0.15 | 0.20 | 3.36 | - |
| | 16 | $LiBF_4$ | TMP | 100 | VEC | 5 | - | 15 | 0 | 0.17 | 0 | 3.36 | - |

Meanings of abbreviations used in Table 7 are as follows.

TMP: trimethyl phosphate
GBL: γ-butyrolactone
EC: ethylene carbonate
PC: propylene carbonate
VC: vinylene carbonate
VEC: 4-vinylethylene carbonate

Table 8

| | | Flash point (°C) | Conductivity (mS/cm) | First-cycle charge-discharge characteristics | |
|---|---|---|---|---|---|
| | | | | discharge capacity (Ah/kg) | charge-discharge efficiency (%) |
| Examples | 37 | None | 6.7 | 91 | 311 |
| | 38 | None | 6.6 | 90 | 330 |
| | 39 | None | 6.7 | 88 | 335 |
| Comparative Examples | 15 | None | 5.1 | 0 | 0 |
| | 16 | None | 5.1 | 0 | 0 |

As can be seen from Table 8, the non-aqueous electrolytes and anode materials in Comparative Examples 15 and 16 have no flash point and thus have nonflammability. However, the resultant batteries exhibit no capacity, and hence they do not function as a battery. On the contrary, the non-aqueous electrolytes and anode materials in Examples 37 to 39 are advantageous not only in that they have no flash point, but also in that excellent charge-discharge characteristics can be obtained.

(Examples 40 to 46)

Non-aqueous electrolyte 3 was used. Specifically, in non-aqueous solvents comprising a chain state phosphate (a1) and optionally a cyclic carboxylate (b1) in a predetermined volume ratio shown in Table 9 below, a predetermined amount of a vinylene carbonate compound (c1) and/or a vinylethylene carbonate compound (c2), predetermined amounts of a cyclic amide compound (d1), a cyclic carbamate compound (d2), and a heterocyclic compound (d3), and a lithium salt as a solute were dissolved individually to prepare non-aqueous electrolytes in Examples 40 to 46 having a solute concentration of 1 mol/$dm^3$. On the other hand, the non-aqueous electrolytes in Comparative Examples 16 and 17 are non-aqueous electrolytes which do not fall in the scope of the present invention.

Anode materials in Examples 40 and 41 were prepared by the following method.

Graphite carbonaceous material (A), having an average particle diameter d50 of 25 μm as measured by a laser diffraction method and having an ABC/AB ratio of 0.25, and petroleum pitch (manufactured by Mitsubishi Chemical Corporation) were stirred and uniformly mixed in air at 70°C by means of a mixer. The resultant powder was subjected to heat treatment by keeping at 1,300°C in an inert atmosphere in a batch-wise heating oven. The resultant powder was cooled in an inert atmosphere, and pulverized so that the average particle diameter d50 was adjusted to be 23

μm to obtain a sample powder. A content of the carbonaceous material (B) calculated from the residual carbon rate was 8% by weight when the total weight of the powder was taken as 100% by weight. The ABC/AB ratio calculated from the X-ray diffraction measurement in accordance with the above-mentioned method was 0.17, and the R value calculated from the results of Raman spectroscopy was 0.40. With respect to the electrochemical evaluations of the anode materials in Examples 40 and 41, the first-cycle charge-discharge efficiency was 88% and the first-cycle discharge capacity was 362 mAh/g.

Each of the anode materials in Examples 42 to 44 was treated in substantially the same manner as in Example 40 except that the heat treatment for the powder by a batch-wise heating oven was conducted at 900°C instead of 1,300°C to obtain a powder having an average particle diameter d50 of 24 μm. A content of the carbonaceous material (B) calculated from the residual carbon rate was 7% by weight when the total weight of the powder was taken as 100% by weight. In addition, each of the anode materials in Examples 45 and 46 was treated in substantially the same manner as in Example 40 except that the heat treatment was conducted at 700°C to obtain a powder having an average particle diameter d50 of 24 μm. A content of the carbonaceous material (B) calculated from the residual carbon rate was 8% by weight when the total weight of the powder was taken as 100% by weight.

On the contrary, in Comparative Example 17, substantially the same procedure as in Example 40 was conducted except that the electrolyte did not contain NMP, that graphite particles obtained by mechanically grinding graphite carbonaceous material (A) were used as an anode material having an average particle diameter d50 of 17 μm as measured by a laser diffraction method, an ABC/AB ratio of 0.20 as calculated from the results of X-ray diffraction measurement, and an R value of 0.15 as calculated from the results of Raman spectroscopy, and that carbonaceous material (B) was not used. Further, in Comparative Example 18, substantially the same procedure as in Example 43 was conducted except that the non-aqueous electrolyte did not contain VC and NMO, and that carbonaceous material (B) was not used.

The compositions of the electrolytes and the powder physical properties parameters of the anode materials are shown in Table 9, and the results of evaluations are shown in Table 10.

## Table 9

| | | Electrolyte | | | | | Anode material | | | | | | |
|---|---|---|---|---|---|---|---|---|---|---|---|---|---|
| | | Solute | Solvent | Volume ratio | Additive | Amount formulated (wt%) | Calcining temperature (°C) | Average particle diameter d5 (μm) | Carbonaceous material (B) content (part by weight) | Raman Rvalue (-) | ABC /AB (-) | Graphite material (A) d002 (Å) | Carbonaceous material (B) d002 (Å) |
| Examples | 40 | $LiPF_6$ | TMP | 100 | VEC+NMP | 5+5 | 1300 | 23 | 8 | 0.40 | 0.17 | 3.35 | 3.45 |
| | 41 | $LiPF_6$ | TMP | 100 | VEC+NMO | 6+5 | 1300 | 23 | 8 | 0.40 | 0.17 | 3.35 | 3.45 |
| | 42 | $LiPF_6$ | TMP | 100 | VEC+VC+NMS | 8+2+5 | 900 | 24 | 7 | 0.52 | 0.19 | 3.35 | 3.46 |
| | 43 | $LiPF_6$ | TMP+PC | 80:20 | VEC+VC+NMO | 8+2+4 | 900 | 24 | 7 | 0.52 | 0.19 | 3.35 | 3.46 |
| | 44 | $LiPF_6$ | TMP+GBL+EC | 60:20:20 | VEC+VC+NMO | 8+2+4 | 900 | 24 | 7 | 0.52 | 0.19 | 3.35 | 3.46 |
| | 45 | $LiBF_4$ | TMP | 100 | VEC+VC+NMP | 8+2+5 | 700 | 24 | 8 | 0.56 | 0.19 | 3.35 | 3.44 |
| | 46 | $LiPF_6$ | TMP+GBL | 80:20 | VEC+VC+NMS | 5+2+5 | 700 | 24 | 8 | 0.56 | 0.19 | 3.35 | 3.44 |
| Comparative Examples | 17 | $LiPF_6$ | TMP | 100 | VEC | 5 | - | 17 | 0 | 0.15 | 0.20 | 3.36 | - |
| | 18 | $LiPF_6$ | TMP+PC | 80:20 | VEC | 5 | 900 | 24 | 7 | 0.52 | 0.19 | 3.35 | 3.46 |

Meanings of abbreviations used in Table 9 are as follows.

TMP: trimethyl phosphate
GBL: γ-butyrolactone
EC: ethylene carbonate
PC: Propylene carbonate
VC: vinylene carbonate
VEC: 4-vinylethylene carbonate
NMP: 1-methyl-2-pyrrolidone
NMO: 3-methyl-2-oxazolone
NMS: N-methylsuccinimide

Table 10

| | | Flash point (°C) | Conductivity (mS/cm) | First-cycle charge-discharge characteristics | |
|---|---|---|---|---|---|
| | | | | discharge capacity (Ah/kg) | charge-discharge efficiency (%) |
| Examples | 40 | None | 5.0 | 88 | 362 |
| | 41 | None | 5.1 | 88 | 355 |
| | 42 | None | 5.1 | 91 | 358 |
| | 43 | None | 6.5 | 88 | 360 |
| | 44 | None | 6.7 | 90 | 357 |
| | 45 | None | 4.9 | 89 | 366 |
| | 46 | None | 6.6 | 86 | 354 |
| Comparative Examples | 17 | None | 4.9 | 0 | 0 |
| | 18 | None | 6.6 | 78 | 287 |

As can be seen from Table 10, the electrolytes and anode materials in Comparative Examples 17 and 18 have no flash point and thus have nonflammability. However, the battery obtained in Comparative Example 17 exhibits no capacity, and hence it does not function as a battery. In addition, the battery obtained in Comparative Example 18 does not exhibit a satisfactory capacity. On the contorary, the non-aqueous electrolytes and anode materials in Examples 40 to 46 are advantageous not only in that they have no flash point, but also in that excellent charge-discharge characteristics can be obtained.

Industrial Applicability

The non-aqueous electrolyte of the present invention is advantageous not only in that it has flame retardancy (self-extinguishing property) or nonflammability (has no flash point), but also in that it has extremely high conductivity. Therefore, by using the non-aqueous electrolyte of the present invention, a lithium secondary battery having both excellent battery charge-discharge characteristics and high safety and reliability can be obtained.

## Claims

1. A non-aqueous electrolyte for a lithium secondary battery to be used in combination with a positive electrode and a negative electrode capable of storing and releasing lithium, which comprises a non-aqueous solvent and a lithium salt dissolved therein,
wherein said non-aqueous solvent comprises:

(a) a phosphate comprising both (a1) a chain state phosphate and (a2) a cyclic phosphate; and
(b1) a cyclic carboxylate.

2. The non-aqueous electrolyte according to claim 1, wherein said chain-state phosphate (a1) is contained in said non-aqueous solvent in an amount of 10 to 60% by volume, based on the total volume of said chain state phosphate (a1 and said cyclic carboxylate (b1

3. A non-aqueous electrolyte for a lithium secondary battery to be used in combination with a positive electrode and a negative electrode capable of storing and releasing lithium, which comprises a non-aqueous solvent and a lithium salt dissolved therein,
wherein said non-aqueous solvent comprises:

(a) at least one phosphate selected from (a1) a chain state phosphate and (a2) a cyclic phosphate;
(b1) a cyclic carboxylate; and

at least one compound selected from (c1) a vinylene carbonate compound and (c2) a vinylethylene carbonate compound.

4. The non-aqueous electrolyte according to claim 3, wherein said phosphate (a) is contained in said non-aqueous solvent in an amount of 10 to 90% by volume, based on the total volume of said phosphate (a) and said cyclic carboxylate (b1).

5. A non-aqueous electrolyte for a lithium secondary battery to be used in combination with a positive electrode and a negative electrode capable of storing and releasing lithium, which comprises a non-aqueous solvent and a lithium salt dissolved therein,
wherein said non-aqueous solvent comprises:

(a) at least one phosphate selected from (a1) a chain state phosphate and (a2) a cyclic phosphate;
at least one compound selected from (c1) a vinylene carbonate compound and (c2) a vinylethylene carbonate compound; and
at least one compound selected from the group consisting of (d1) a cyclic amide compound, (d2) a cyclic carbamate compound, and (d3) a heterocyclic compound.

6. The non-aqueous electrolyte according to claim 5, wherein said non-aqueous solvent further comprises (b1) a cyclic carboxylate, wherein said phosphate (a) is contained in said non-aqueous solvent in an amount of 10 to less than 100% by volume, based on the total volume of said phosphate (a) and said cyclic carboxylate (b1).

7. A non-aqueous electrolyte for a lithium secondary battery to be used in combination with a positive electrode and a negative electrode capable of storing and releasing lithium, said non-aqueous electrolyte comprising a non-aqueous solvent and a lithium salt dissolved therein
wherein said non-aqueous solvent comprises:

(a) at least one phosphate selected from (a1) a chain state phosphate and (a2) a cyclic phosphate; and
(c1) a vinylene carbonate compound and (c2) a vinylethylene carbonate compound.

8. The non-aqueous electrolyte according to claim 7, wherein said non-aqueous solvent further comprises at least one compound selected from (b1) a cyclic carboxylate and (b2) a cyclic carbonate, wherein said phosphate (a) is contained in said non-aqueous solvent in an amount of 60 to less than 100% by volume, based on the total volume of said phosphate (a) and said at least one compound selected from the cyclic carboxylate (b1) and the cyclic carbonate (b2).

**9.** The non-aqueous electrolyte according to any one of claims 1 to 8, wherein said chain state phosphate (a1) is represented by said following formula (I):

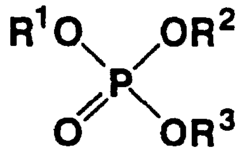

(I)

(wherein $R^1$ to $R^3$ each independently represent an unsubstituted or fluorine-substituted linear or branched alkyl group having 1 to 4 carbon atoms), and

said cyclic phosphate (a2) is represented by the following formula (II):

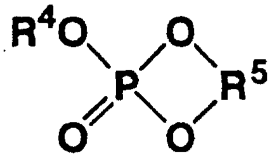

(II)

(wherein $R^4$ represents an unsubstituted or fluorine-substituted, linear or branched alkyl group having 1 to 4 carbon atoms, and $R^5$ represents a linear or branched alkylene group having 2 to 8 carbon atoms).

**10.** The non-aqueous electrolyte according to claim 9, wherein said chain state phosphate (a1) is at least one chain state phosphate selected from the group consisting of trimethyl phosphate, trifluoroethyldimethyl phosphate, bis (trifluoroethyl)methyl phosphate and tris(trifluoroethyl) phosphate, and said cyclic phosphate (a2) is at least one cyclic phosphate selected from the group consisting of ethylenemethyl phosphate, ethyleneethyl phosphate and ethylenetrifluoroethyl phosphate.

**11.** The non-aqueous electrolyte according to any one of claims 1 to 4, 6, and 8 to 10, wherein said cyclic carboxylate (b1) is at least one cyclic carboxylate selected from the group consisting of γ-butyrolactone, γ-valerolactone, γ-caprolactone, γ-octanolactone, β-butyrolactone, δ-valerolactone, and ε-caprolactone.

**12.** The non-aqueous electrolyte according to any one of claims 8 to 11, wherein said cyclic carbonate (b2) is at least one cyclic carbonate selected from the group consisting of ethyelne carbonate, propylene carbonate, and butylene carbonate.

**13.** The non-aqueous electrolyte according to any one of claims 3 to 12, wherein said vinylene carbonate compound (c1) is represented by the following formula (III):

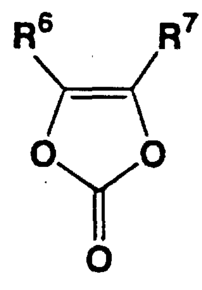

(III)

(wherein $R^6$ and $R^7$ each independently represent a hydrogen atom, an alkyl group having 1 to 4 carbon atoms, or a branched alkyl group), and

said vinylethylene carbonate compound (c2) is represented by the following formula (IV):

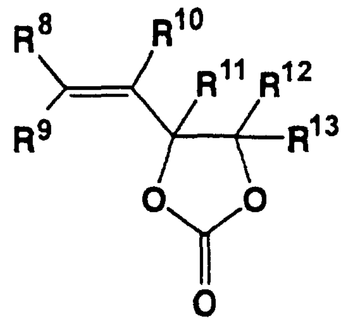

(IV)

(wherein $R^8$ to $R^{13}$ each independently represent a hydrogen atom, or a linear or branched alkyl group having 1 to 4 carbon atoms).

**14.** The non-aqueous electrolyte according to claim 13, wherein said vinylene carbonate compound (c1) is at least one vinylene carbonate compound selected from the group consisting of vinylene carbonate, 4-methylvinylene carbonate, 4-ethylvinylene carbonate, 4,5-dimethylvinylene carbonate, 4,5-diethylvinylene carbonate and 4-methyl-5-ethylvinylene carbonate, and said vinylethylene carbonate compound (c2) is at least one vinylethylene carbonate compound selected from the group consisting of 4-vinylethylene carbonate, 4-vinyl-4-methylethylene carbonate, 4-vinyl-4-ethylethylene carbonate, 4-vinyl-4-n-propylethylene carbonate,' 4-vinyl-5-methylethylene carbonate, 4-vinyl-5-ethylethylene carbonate, and 4-vinyl-5-n-propylethylene carbonate.

**15.** The non-aqueous electrolyte according to claim 13 or 14, wherein a content of at least one compound selected from said vinylene carbonate compound (c1) and said vinylethylene carbonate compound (c2) is 0.1 to 15% by weight based on the total weight of said non-aqueous electrolyte.

**16.** The non-aqueous electrolyte according to any one of claims 5, 6, 9 to 11, and 13 to 15, wherein said cyclic amide compound (d1) is represented by the following formula (V) :

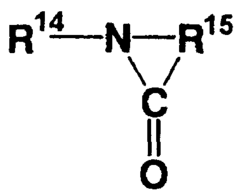

(V)

(wherein $R^{14}$ represents a linear or branched alkyl group having 1 to 4 carbon atoms, a vinyl group or an allyl group, or a cycloalkyl group, an aryl group or an aralkyl group having 6 to 8 carbon atoms, and $R^{15}$ represents a divalent hydrocarbon group having 2 to 8 carbon atoms),

said cyclic carbamate compound (d2) is represented by the following formula (VI):

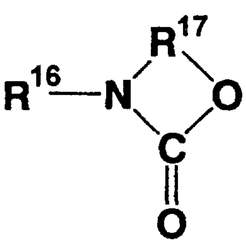

(VI)

(wherein $R^{16}$ represents a linear or branched alkyl group having 1 to 4 carbon atoms, a vinyl group or an allyl group, or a cycloalkyl group, an aryl group or an aralkyl group having 6 to 8 carbon atoms, and $R^{17}$ represents a divalent hydrocarbon group having 2 to 8 carbon atoms), and

said heterocyclic compound (d3) is represented by the following formula (VII):

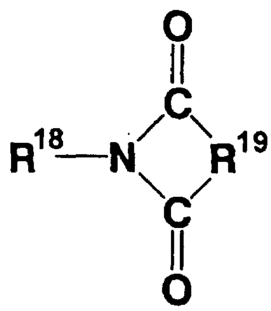

(VII)

(wherein $R^{18}$ represents a linear or branched alkyl group having 1 to 4 carbon atoms, a vinyl group or an allyl group, or a cycloalkyl group, an aryl group or an aralkyl group having 6 to 8 carbon atoms, and $R^{19}$ represents a divalent hydrocarbon group having 2 to 8 carbon atoms).

**17.** The non-aqueous electrolyte according to claim 16, wherein a content of said at least one compound selected from the cyclic amide compound (d1), the cyclic carbamate compound (d2) and the heterocyclic compound (d3) is 0.1 to 15% by weight based on the total weight of the non-aqueous electrolyte.

**18.** The non-aqueous electrolyte according to any one of claims 1 to 17, wherein said lithium salt is an inorganic acid lithium salt selected from $LiPF_6$ and $LiBF_4$, or an organic acid lithium salt selected from the group consisting of $LiCF_3SO_3$, $LiN(CF_3SO_2)_2$, $LiN(C_2F_5SO_2)_2$, $LiN(CF_3SO_2)$ $(C_4F_9SO_2)$, $LiPF_3(C_2F_5)_3$. and $LiB(CF_3COO)_4$.

**19.** A lithium secondary battery comprising the non-aqueous electrolyte according to any one of claims 1 to 18, and a positive electrode and a negative electrode which are capable of storing and releasing lithium.

**20.** The lithium secondary battery according to claim 19, wherein said negative electrode satisfies the following conditions:

(1) said negative electrode comprises an anode material comprising a graphite carbonaceous material (A) having a plane spacing $d_{002}$ value of the (002) plane of less than 0.337 nm and a carbonaceous material (B) having the plane spacing $d_{002}$ value of the (002) plane of 0.337 nm or more, as measured by wide-angle X-ray diffractometry;
(2) that the weight ratio between said graphite carbonaceous material (A) and said carbonaceous material (B) is 99.5:0.5 to 50:50; and
(3) that said anode material has an R value of more than 0.2 and 1.5 or less, wherein the R value is represented by IB/IA wherein IA represents a peak intensity appearing in the range of from 1,570 to 1,620 $cm^{-1}$, and IB represents a peak intensity appearing in the range of from 1,350 to 1,370 $cm^{-1}$, as measured by Raman spectroscopy using an argon ion laser with a wavelength of 514.5 nm.

**21.** The lithium secondary battery according to claim 20, wherein said graphite carbonaceous material (A) has at least part of a surface thereof coated with said carbonaceous material (B).

**22.** The lithium secondary battery according to claim 20 or 21, wherein said anode material is obtained by calcining a mixture of said graphite carbonaceous material (A) and an organic material.

**23.** The lithium secondary battery according to claim 22, wherein said calcination is conducted at a calcination temperature of 500 to 2,200°C.

**24.** The lithium secondary battery according to any one of claims 20 to 23, wherein the R value of said anode material is 0.35 to 1.1.

**25.** The lithium secondary battery according to any one of claims 20 to 23, wherein the R value of said anode material is 0.4 to 0.9.

**26.** The lithium secondary battery according to any one of claims 20 to 25, wherein said anode material has an intensity ratio represented by ABC(101)/AB(101) of 0.15 or more, wherein AB(101) represents a peak intensity ascribed to

the orientation of the hexagonal crystal system graphite layer, and ABC(101) represents a peak intensity ascribed to the orientation of the rhombohedral crystal system graphite layer, as measured by wide-angle X-ray diffractometry.

**27.** The lithium secondary battery according to any one of claims 20 to 25, wherein said graphite carbonaceous material (A) has an intensity ratio represented by ABC(101)/AB(101) of 0.2 or more.

**28.** The lithium secondary battery according to any one of claims 20 to 27, wherein said anode material comprising said graphite carbonaceous material (A) and said carbonaceous material (B) has a surface area of 0.5 to 25 $m^2/g$ as measured by a BET method.

**29.** The lithium secondary battery according to any one of claims 20 to 28, wherein said anode material comprising said graphite carbonaceous material (A) and said carbonaceous material (B) has a particle diameter of 4 to 40 μm.

**30.** The lithium secondary battery according to any one of claims 19 to 29, wherein said negative electrode comprises at least one anode material selected from a carbonaceous material having a d value of the (002) plane of 0.335 to 0.34 nm as measured by X-ray diffractometry, an oxide of at least one metal selected from Sn, Si, and Al, and an alloy of lithium and at least one metal selected from Sn, Si, and Al.

Fig. 1

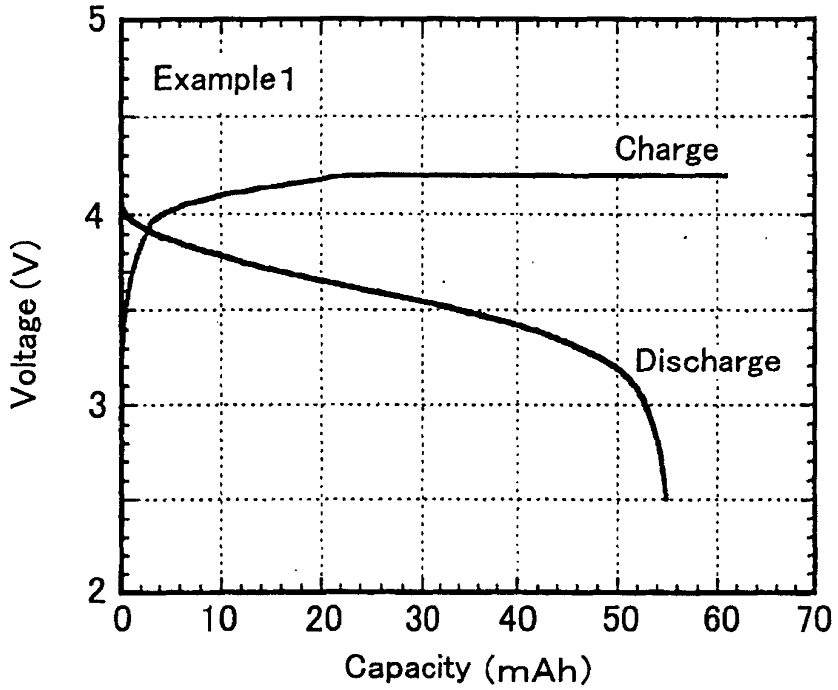
Example1
Charge
Discharge
Voltage (V)
Capacity (mAh)
5
4
3
2
0
10
20
30
40
50
60
70

Fig. 2

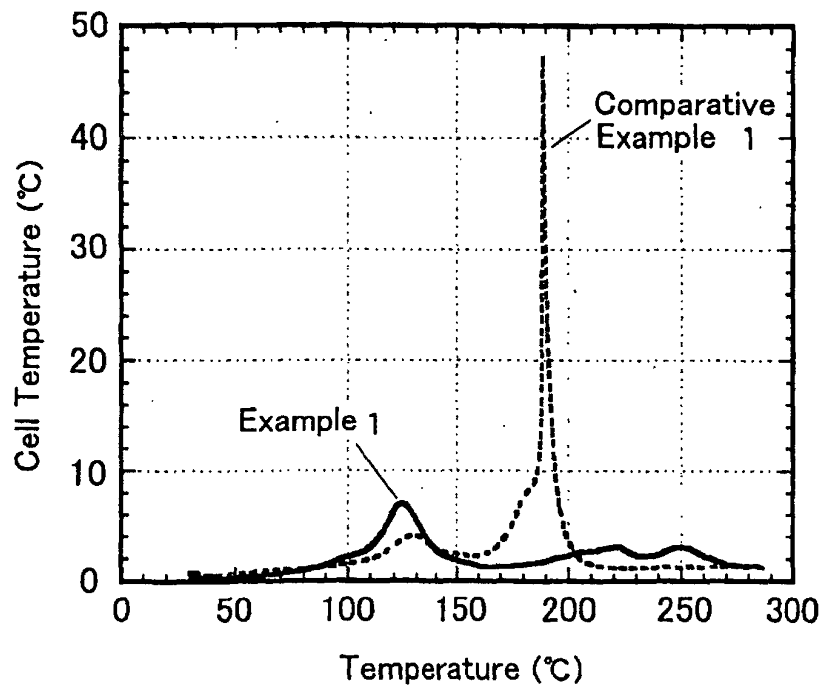
Comparative
Example 1
Example 1
Cell Temperature (℃)
Temperature (℃)
50
40
30
20
10
0
0
50
100
150
200
250
300

Fig. 3

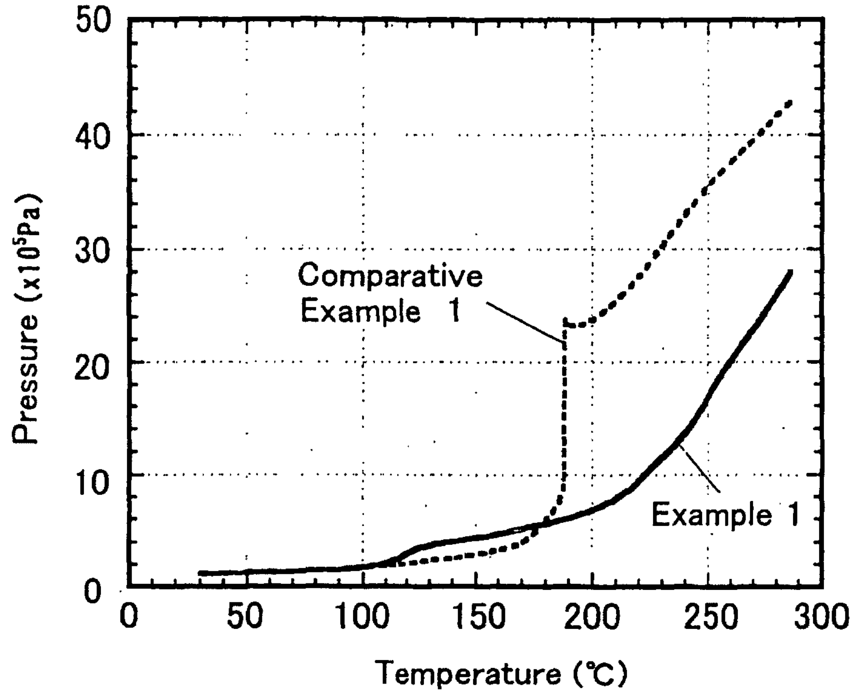
Pressure (x10⁵Pa)
Temperature (℃)
Comparative Example 1
Example 1
0
10
20
30
40
50
0
50
100
150
200
250
300

Fig. 4

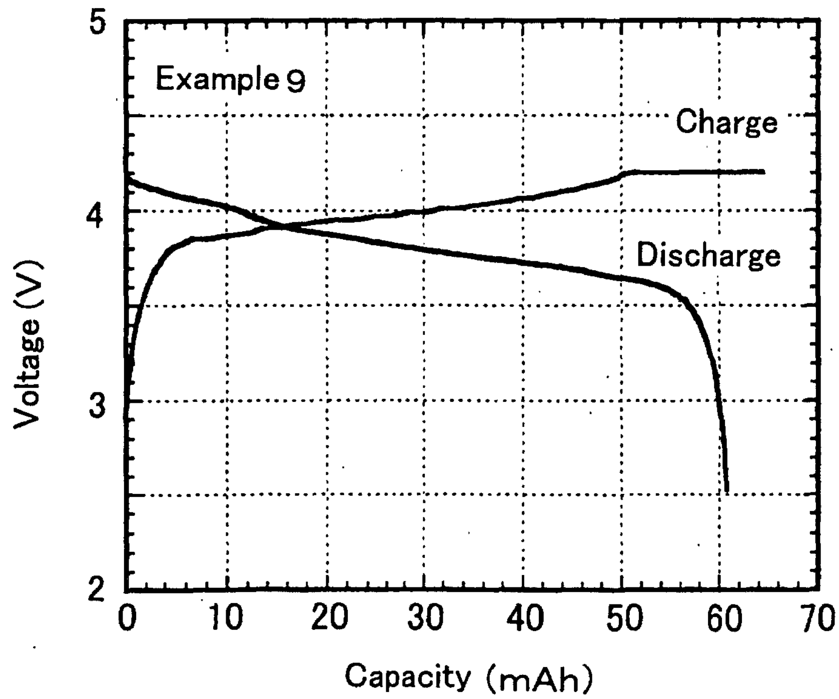
Voltage (V)
Capacity (mAh)
Example 9
Charge
Discharge
2
3
4
5
0
10
20
30
40
50
60
70

Fig. 5

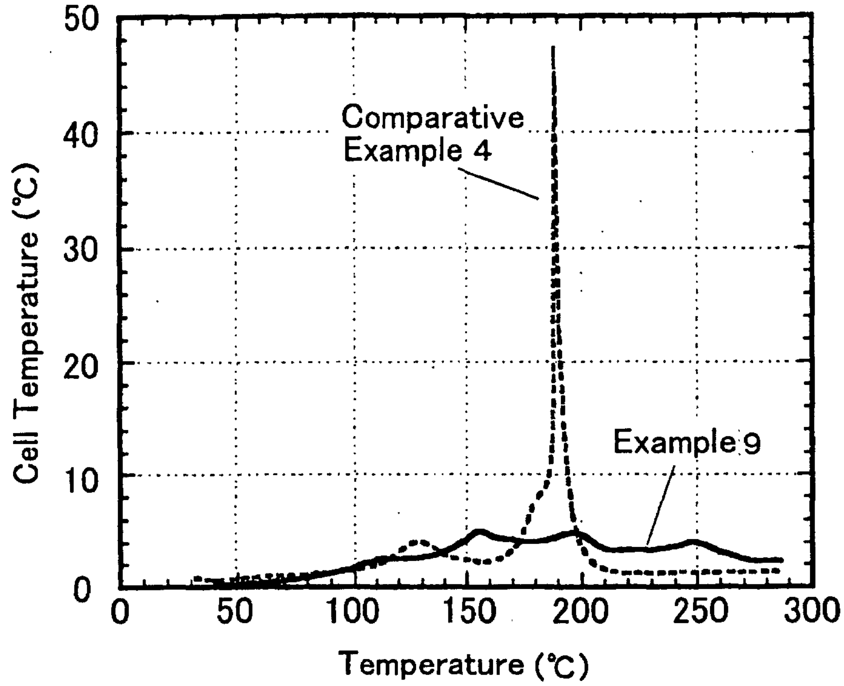
50
40
30
20
10
0
Cell Temperature (℃)
Comparative
Example 4
Example 9
0
50
100
150
200
250
300
Temperature (℃)

Fig. 6

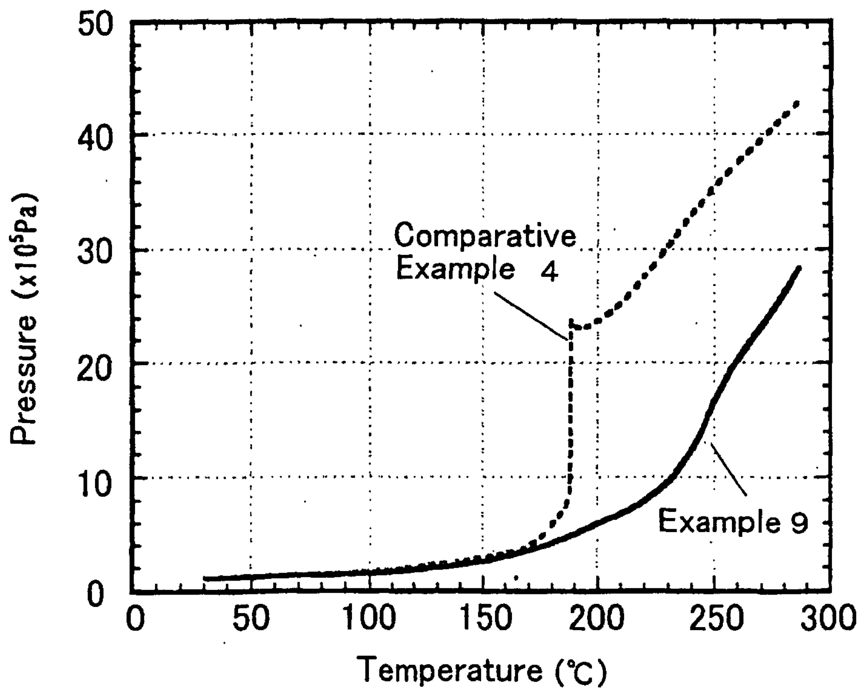
50
40
30
20
10
0
Pressure (x10⁵Pa)
Comparative
Example 4
Example 9
0
50
100
150
200
250
300
Temperature (℃)

Fig. 7

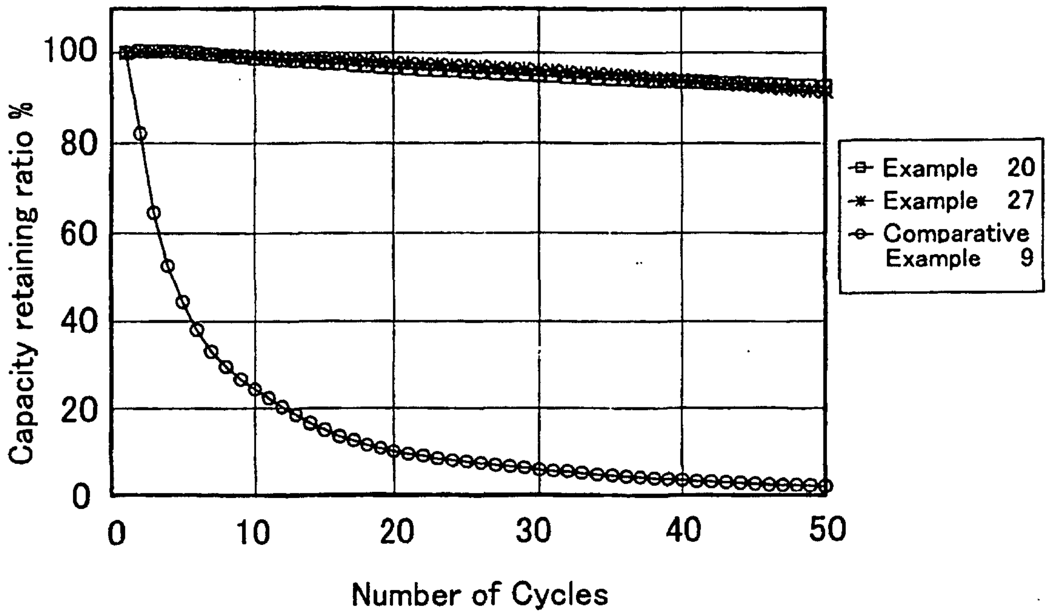
100
80
60
40
20
0
Capacity retaining ratio %
0
10
20
30
40
50
Number of Cycles
Example 20
Example 27
Comparative Example 9

## INTERNATIONAL SEARCH REPORT

International application No.
PCT/JP01/11630

A. CLASSIFICATION OF SUBJECT MATTER
Int.Cl$^7$ H01M10/40, 4/58, 4/02

According to International Patent Classification (IPC) or to both national classification and IPC

B. FIELDS SEARCHED

Minimum documentation searched (classification system followed by classification symbols)
Int.Cl$^7$ H01M4/00-4/04, 4/36-4/62, 10/36-10/40

Documentation searched other than minimum documentation to the extent that such documents are included in the fields searched

| | | | |
|---|---|---|---|
| Jitsuyo Shinan Koho | 1926-1996 | Jitsuyo Shinan Toroku Koho | 1996-2002 |
| Kokai Jitsuyo Shinan Koho | 1971-2002 | Toroku Jitsuyo Shinan Koho | 1994-2002 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP, 11-273727, A (Hitachi Maxell, Ltd.), 08 October, 1999 (08.10.99), Claims 1 to 11; column 6, lines 38 to 47; column 7, lines 11 to 45 (Family: none) | 1,2,9-11,18,19<br>20-30<br>3-8,12-17 |
| X<br><br>Y<br>A | JP, 11-260401, A (Mitsui Chemicals, Ltd.), 24 September, 1999 (24.09.99), Claims 1 to 5; column 7, lines 1 to 14; column 8, lines 4 to 18 (Family: none) | 3,4,9-11,<br>13-15,18,19<br>20-30<br>1,2,5-<br>8,12,16,17 |
| Y | JP, 2000-340232, A (Mitsubishi Chemical Corp.), 08 December, 2000 (08.12.00), Claims 1, 3, 4 to 6; column 11, line 26 to column 13, line 44 (Family: none) | 20-30 |

[X] Further documents are listed in the continuation of Box C. [ ] See patent family annex.

* Special categories of cited documents:
- "A" document defining the general state of the art which is not considered to be of particular relevance
- "E" earlier document but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 28 March, 2002 (28.03.02) | 09 April, 2002 (09.04.02) |
| Name and mailing address of the ISA/<br>Japanese Patent Office | Authorized officer |
| Facsimile No. | Telephone No. |

Form PCT/ISA/210 (second sheet) (July 1998)

## INTERNATIONAL SEARCH REPORT

International application No.
PCT/JP01/11630

C (Continuation). DOCUMENTS CONSIDERED TO BE RELEVANT

| Category* | Citation of document, with indication, where appropriate, of the relevant passages | Relevant to claim No. |
|---|---|---|
| Y | JP, 6-318459, A (Toshiba Corp.), 15 November, 1994 (15.11.94), Claim 1; column 8, lines 39 to 43; column 18, lines 16 to 18 (Family: none) | 26,27 |
| A | JP, 2000-149985, A (Mitsubishi Chemical Corp.), 30 May, 2000 (30.05.00), (Family: none) | 1-30 |

Form PCT/ISA/210 (continuation of second sheet) (July 1998)